# EUROPÄISCHE PATENTSCHRIFT

(11) **EP 1 909 585 B1**
(45) Veröffentlichungstag und Bekanntmachung des Hinweises auf die Patenterteilung: **02.05.2012**
(21) Anmeldenummer: 06764193.6
(22) Anmeldetag: 17.07.2006
(51) Int. Cl.: A21C 9/04

(54) **VORRICHTUNG UND VERFAHREN ZUR HERSTELLUNG EINES MIT VERSCHIEDENEN BELÄGEN BELEGTEN TEIGGEBÄCKS**
DEVICE AND METHOD FOR PRODUCING A DOUGH PRODUCT TOPPED WITH VARIOUS TOPPINGS
SYSTÈME ET PROCÉDÉ POUR PRODUIRE UN PRODUIT À BASE DE PÂTE GARNI DE DIFFÉRENTES GARNITURES

(30) Priorität: 20.07.2005 DE 102005034510
(43) Veröffentlichungstag der Anmeldung: 16.04.2008
(73) Patentinhaber: Westberg, Till, 60431 Frankfurt Am Main (DE)
(72) Erfinder: Westberg, Till, 60431 Frankfurt Am Main (DE)
(74) Vertreter: Blasberg, Tilo
(86) Internationale Anmeldenummer: PCT/EP2006/064339
(87) Internationale Veröffentlichungsnummer: WO 2007/009979

(56) Entgegenhaltungen:
- US-A- 3 358 618
- US-A- 3 602 154
- US-A- 3 760 715
- US-A- 3 851 554
- US-A- 4 112 834
- US-A- 4 685 387
- US-A- 5 121 677
- US-A- 5 458 055
- US-A- 5 921 170
- US-A1- 2002 020 348
- US-A1- 2003 183 164
- US-A1- 2005 123 659

## Beschreibung

### Gebiet der Erfindung

Die vorliegende Erfindung betrifft allgemein eine Vorrichtung und ein Verfahren zur Herstellung eines mit verschiedenen Belägen bzw. Zutaten belegten Teiggebäcks, insbesondere einer Pizza, und betrifft insbesondere eine derartige Vorrichtung bzw. ein entsprechendes Verfahren zur Herstellung von Pizzen und vergleichbaren Teiggebäcken mit Eignung zur Verwendung in Gastronomiekonzepten vergleichbar zu Fastfood-Restaurants sowie auch geeignet für Anwendungen in der Erlebnisgastronomie.

### Hintergrund der Erfindung

Pizzen und vergleichbares Teiggebäck werden in der Kleingastronomie üblicherweise individuell zubereitet und verkauft. Die Herstellung von individuell belegten Pizzen ist vergleichsweise arbeitsaufwendig. Dies hat gerade in größeren Pizzarestaurants zu einer strengen Arbeitsteilung geführt, derzufolge eine Person die Teige knetet und auf Bleche auflegt, eine andere Person die Zutaten bzw. Beläge von Hand aufbringt und eine weitere Person die Pizza in einem Ofen, insbesondere auch in einem Holzofen, bäckt. Schließlich wird die Pizza ausgegeben, kann aber auch in eine Warmhaltebox zur Auslieferung gegeben werden. Nur in kleineren Pizzarestaurants ist nur eine Person zuständig für die gesamte Herstellung der Pizza. In Pizzarestaurants ist immer wieder zu beobachten, dass die dafür zuständige Person in der Küche die Pizza für die Gäste des Restaurants sichtbar zubereitet, was den Erlebniswert des Restaurantaufenthalts steigern soll.

Aus Kostengründen ist eine maschinelle bzw. automatisierte Herstellung von Pizzen und vergleichbaren Teiggebäcken erwünscht. Entsprechende Konzepte gibt es jedoch nur für die Großgastronomie, insbesondere auch für die Herstellung von Tiefkühlpizzen. Üblicherweise wird dabei ein bereits ausgewalzter Pizzateig, üblicherweise ein Tiefkühlteig, auf einem Förderband sequenziell an Belag-Ausgabevorrichtungen vorbeigeführt, wo Beläge bzw. Zutaten auf den Teig ausgegeben werden, in Entsprechung zu der jeweils gewünschten Pizzasorte. Entsprechende Konzepte sind beispielsweise in den nachfolgenden Patenten offenbart: US 6,546,847 B2, US 6,245,370 B1, US 4,197,794 sowie US 4,060,027. Derartige Konzepte sind jedoch nicht für die Kleingastronomie geeignet, da die Anschaffungs- und Unterhaltskosten zu hoch sind und das erforderliche Bauvolumen der Vorrichtung zu groß ist. Ein weiterer Nachteil besteht darin, dass sich mit solchen Konzepten eine individuelle Herstellung von Pizzen nicht realisieren lässt, was ja gerade in der Kleingastronomie nachgefragt ist. Will beispielsweise ein Kunde einen vergleichsweisen dicken Pizzateig cross gebacken, mit einer sehr individuellen Zusammenstellung der Beläge und Belagsmengen, so lässt sich dies von Hand ohne Weiteren realisieren. Automatisierte Konzepte für eine solche individuelle Herstellung von Pizzen sind jedoch aus dem Stand der Technik kaum bekannt.

US 5,921,170 A offenbart eine Vorrichtung zur Herstellung von Pizzen, die die traditionelle Herstellung einer Pizza durch eine Person möglichst detailliert nachbildet, um so eine möglichst individuelle Herstellung von Pizzen zu ermöglichen. Zentrales Element dieser gattungsbildenden Vorrichtung ist dabei eine zentral positionierte drehbewegliche Positionierungseinrichtung, die auf Haltearmen in sternförmiger Anordnung mehrere jeweils drehbeweglich gelagerte Positionierungsteller trägt, auf denen runde Bleche mit dem darin aufgenommenen Pizzateig gehalten werden. Um die zentral angeordnete Positionierungseinrichtung herum sind mehrere Belag-Ausgabevorrichtungen verteilt angeordnet, und zwar In einer sog. Revolver-Anordnung. Durch Drehen der drehbeweglichen Positionierungseinrichtung werden die auf den Haltearmen positionierten Bleche mit dem Pizzateig wahlweise zu geeigneten Belag-Ausgabevorrichtungen gedreht. Nach Durchlaufen der verschiedenen Belag-Ausgabevorrichtungen kann so eine individuell erstellte Pizza erzielt werden.

Die bei diesem Konzept verwendete Revolver-Anordnung von Belag-Ausgabevorrichtungen lässt es jedoch prinzipiell nicht zu, eine große Anzahl von unterschiedlichen Belag-Ausgabevorrichtungen verteilt um die Drehmitte der Vorrichtung herum anzuordnen. Dies verringert die maximale Anzahl unterschiedlicher Arten von Pizzen, die hergestellt werden können, drastisch. Somit müssen Belaggemische, beispielsweise Schinkenwürfen und Käsewürfel gleichzeitig, von einer Belag-Ausgabevorrichtung ausgegeben werden, was die realisierbare Vielfalt und den Geschmack weiter einschränkt. Die Positionierung der Pizzateige unterhalb der Belag-Ausgabevorrichtungen ist vergleichsweise aufwendig und kann nur durch geeignete Wahl der Winkelstellung der Haltearme und der Radialstellung der Teigträger realisiert werden. Dies erfordert spezielle Mechanismen und Steuerungen, was die Kosten der Vorrichtung weiter erhöht. Dennoch lässt sich eine exakt indexierte Positionierung der Teigträger bei der gewählten Revolver-Anordnung häufig nicht zuverlässig gewährleisten. Ferner ist der Abstand zwischen dem Teigträger und dem unteren Ende der Belag-Ausgabevorrichtung vergleichsweise groß, was zu einer Verschmutzung der Vorrichtung und somit zu unnötigen Reinigungskosten führt.

US 4,685,387 offenbart eine Vorrichtung gemäß dem Oberbegriff von Patentanspruch 1, die allerdings das automatisierte Belegen von Sandwiches und nicht von Pizzen betrifft. Offenbart ist, dass die Speicherbehälter für die verschiedenen Beläge in einer Matrixanordnung angeordnet sind. Ein Wagen trägt eine Sandwichscheibe und wird in Entsprechung zu einer Nutzerauswahl in geeigneter Weise unter Steuerung eines hiefür zuständigen Controllers sequentiell unter die entsprechenden Behälter bewegt. Dann wird mit Hilfe des Hebelmechanismus die Ausgabe von Belag aus einem jeweiligen Behälter bewirkt, und zwar nur dann, wenn der Wagen in vorbestimmter Weise relativ zu dem jeweiligen Behälter positioniert ist. Die Beläge fallen aus einem Speicherbehälter auf die darunter befindliche Sandwichscheibe herab.

### Zusammenfassung der Erfindung

Aufgabe der vorliegenden Erfindung soll es somit sein, eine Vorrichtung der bereitzustellen, womit sich flache Teiggebäcke kostengünstig individuell belegen lassen, und zwar bei gleichmäβiger Verteilung derBeläge auf dem Teig, sowie geringen Anschaffungs- und Wartungskosten der Vorrichtung. Gemäß weiteren Gesichtspunkten der vorliegenden Erfindung soll ferner ein entsprechendes Herstellungsverfahren bereit gestellt werden.

Diese und weitere Aufgaben werden gemäß der vorliegenden Erfindung durch eine Vorrichtung nach Anspruch 1 sowie durch ein Verfahren nach Anspruch 12 gelöst. Weitere vorteilhafte Ausführungsformen sind Gegenstand der rückbezogenen Unteransprüche.

Somit geht die vorliegende Erfindung aus von einer Vorrichtung zur Herstellung eines flachen, mit verschiedenen Belägen belegten Teiggebäcks, insbesondere einer Pizza, mit einer Mehrzahl von Belag-Ausgabevorrichtungen und zumindest einer beweglichen Positionierungseinrichtung, die vertikal unterhalb einer von den Belag-Ausgabevorrichtungen aufgespannten Ebene vorgesehen ist und der ein Teigträger zugeordnet ist, wobei die Positionierungseirinchtung von einer Antriebseinrichtung angetrieben ist, um den Teigträger zur Ausgabe von Belag unterhalb einer jeweiligen Belag-Ausgabevorrichtung zu positionieren. Dabei sind die Belag-Ausgabevorrichtungen in einer Matrixanordnung entlang von zwei zueinander orthogonalen Raumrichtungen verteilt angeordnet und ist die Positionierungseinrichtung zum Positionieren des Teigträgers in den zwei zueinander orthogonalen Raumrichtungen in Entsprechung zu der Matrixanordnung ausgelegt. Durch die gewählte Matrixanordnung lässt sich dabei eine sehr dichte Packung der Behälter realisieren, so dass erheblich Bauraum eingespart werden kann, gleichzeitig jedoch eine Vielzahl unterschiedlicher Belagarten realisiert werden kann. Durch die klar gegliederte Ausrichtung der Behälter entlang von zwei zueinander orthogonalen Raumrichtungen ist ferner die indexierte Positionierung des Teigträgers mit dem darauf gehaltenen Teig erheblich vereinfacht, da indexierte xy-Positionierungseinrichtungen mit hoher Präzision kostengünstig erhältlich sind und eine indexierte Verstellung rasch und präzise ausgeführt werden kann.

Somit sind die Behälter bevorzugt an den Schnittpunkten von aufeinander senkrecht stehenden Zeilen und Spalten einer Matrixanordnung angeordnet. Selbstverständlich können die Zeilen und Spalten der vorgenannten Matrixanordnung auch unter einem anderen Winkel als dem rechten Winkel aufeinander stehen und kann die Matrixanordnung auch in anderer Weise als vorstehend beschrieben gebildet werden. Eine einfache und rasche Positionierung im Sinne der Erfindung kann dabei stets dann ohne weiteres erzielt werden, wenn die Behälter in einer regelmäßigen Anordnung angeordnet sind, d.h. unter regelmäßigen, bevorzugt äquidistanten, Abständen zueinander.

Erfindungsgemäß ist der Teigträger drehbeweglich gelagert. Dies ermöglicht eine noch gleichmäßigere Verteilung der Beläge und/oder Zutaten auf dem Teig durch Drehen des Teigs während der Ausgabe. Ferner kann durch Drehen des Teigträgers und Anlage an einem Gegenstück, beispielsweise an einem Rakel, auch ein auf diesen aufgebrachtes Teigstück bzw. Belag in einfacher Weise zu einem runden, kreisförmigen Teig bzw. einer kreisförmigen Belagschicht gleichmäßiger Dicke vergleichmäßigt werden.

Gemäß einer weiteren Ausfüllrungsform können Führungsmittel wie beispielsweise Führungsschienen, Führungsstangen oder dergleichen, vorgesehen sein, die exakt parallel zu den zwei zueinander orthogonalen Raumrichtungen ausgerichtet sind bzw. in Entsprechung zu der vorgenannten Matrixanordnung ausgerichtet sind. Wagen bzw. Schlitten der xy-Positionierungseinrichtung können an diesen Führungsmitteln somit im Wesentlichen spielfrei geführt und gelagert sein. Die Führungsmittel können insbesondere eine rasche Positionierung der Teigträger unterhalb eines vorbestimmten Behälters ermöglichen.

Gemäß einer weiteren Ausführungsform kann die Positionierungseinrichtung ferner eine Hubeinrichtung zum Anheben und Absenken des Teigträgers umfassen, wobei die Ausgabe von Belag durch eine Belag-Ausgabevorrichtung durch Positionieren des Teigträgers unterhalb der Belag-Ausgabevorrichtung sowie durch Anheben des Teigträgers bis zum Erreichen eines vorbestimmten maximalen Abstands oder eines verschwindenden Abstands zwischen dem Teigträger und einem unteren Ende der Belag-Ausgabevorrichtung ausgelöst wird. Somit wird Belag erst bei Einnehmen eines vorbestimmten Abstands zwischen dem Teigträger und dem unteren Ende des Behälters bzw. der Belag-Ausgabevorrichtung ausgegeben.

Erhebliche Vorteile ergeben sich gemäß einer weiteren Ausführungsform, wenn die Belag-Ausgabevorrichtungen passiv angetrieben werden, weil so Antriebseinrichtungen eingespart werden können.

Gemäß einer weiteren Ausführungsform sind die Positionierungseinrichtung und die Belag-Ausgabevorrichtungen so ausgelegt, dass die Ausgabe von Belag durch die jeweilige Belag-Ausgabevorrichtung nur dann ausgelöst wird, wenn der Teigträger in vorbestimmter Weise relativ zu der jeweiligen Belag-Ausgabevorrichtung positioniert ist. Somit kann eine versehentliche Ausgabe von Belag zuverlässig ausgeschlossen und der Belag somit sehr kontrolliert ausgegeben werden.

Gemäß einer weiteren Ausführungsform weist der Teigträger und/oder die Positionierungseinrichtung ein Eingriffsmittel zum Eingriff in ein korrespondierend ausgebildetes Auslösemittel auf, das jeweils am unteren Ende der Belag-Ausgabevorrichtungen vorgesehen ist, wobei die Belag-Ausgabevorrichtung so ausgelegt ist, dass Belag nur dann ausgegeben wird, wenn das Eingriffsmittel und das Auslösemittel sich im gegenseitigen Eingriff befinden bzw. zusammen wirken. Dadurch wird in einfacher Weise eine mechanische Kontrollmöglichkeit zum Auslösen einer Belagausgabe realisiert.

Gemäß einer weiteren Ausführungsform kann das Eingriffsmittel als Fortsatz mit einer Rastaussparung am Umfangsrand des Teigträgers und das Auslösemittel als Rastvorsprung am unteren Ende der Belag-Ausgabevorrichtungen ausgebildet sein.

Gemäß einer weiteren Ausführungsform kann das Eingriffsmittel ferner ein Kopplungsglied zur Kopplung mit einer Belag-Ausgabevorrichtung umfassen, wobei das Kopplungsglied im Eingriff mit dem Auslösemittel auf einer Drehachse des Teigträgers und der Belag-Ausgabevorrichtung angeordnet und zum Drehantrieb eines Ausgabemittels der Belag-Ausgabevorrichtung ausgelegt ist.

Gemäß einer weiteren Ausführungsform kann das Auslösemittel mit einem Verschlussglied am unteren Ende der Belag-Ausgabevorrichtung zum Verschließen der Belag-Ausgabevorrichtung gekoppelt sein oder dieses ausbilden.

Gemäß einer weiteren Ausführungsform kann beim Anheben des Teigträgers das in Eingriff mit dem Auslösemittel stehende Eingriffsmittel das Verschlussglied zur Ausgabe und/oder Konditionierung von Belag vertikal verstellen.

Gemäß einer weiteren Ausführungsform kann im unteren Endbereich von zumindest einer Belag-Ausgabevorrichtung eine mit Aussparungen versehene und um eine Behälterlängsachse drehbeweglich gelagerte Scheibe sowie ein Verschlussglied vorgesehen sein, so dass durch die Winkelstellung der Aussparungen und des jeweiligen Schlitzes, durch die Dicke der Scheibe und/oder durch die Drehgeschwindigkeit der Scheibe die Belag-Ausgaberate steuerbar ist.

Gemäß einer weiteren Ausführungsform kann die Scheibe eine Mehrzahl von Aussparungen unterschiedlicher Größe aufweisen, die insbesondere unter gleichmäßigen Winkel- und/oder Radialabständen auf der Scheibe verteilt angeordnet sind.

Gemäß einer weiteren Ausführungsform kann der Teigträger zur Aufnahme eines freigeschobenen Teigs, insbesondere Pizzateigs, ausgelegt sein.

Gemäß einer weiteren Ausführungsform weist der Teigträger ferner eine Fördereinrichtung zum Abtransportieren eines belegten Teigs zu einer nachgeordneten Bearbeitungsstation auf.

Gemäß einer weiteren Ausführungsform ist die Fördereinrichtung als Förderband ausgebildet ist, welches eine Auflagefläche am oberen Ende des Teigträgers überspannt, so dass Teig unmittelbar auf das Förderband aufgelegt werden kann.

Gemäß einer weiteren Ausführungsform umfasst die vorgenannte Fördereinrichtung zumindest eine sich tangential zum Teigträger erstreckende Walze, bevorzugt weiterhin eine dazu orthogonal ausgerichtete zweite Walze, wobei die Walzen jeweils in einem Schlitz in der Auflagefläche des Teigträgers versenkt angeordnet sind.

Gemäß einer weiteren Ausführungsform umfasst die Vorrichtung ferner ein Gehäuse mit einer zugeordneten Kühlvorrichtung, wobei zumindest einige der Belag-Ausgabevorrichtungen und bevorzugter die gesamte Vorrichtung einschließlich sämtlicher Belag-Ausgabevorrichtungen innerhalb des Gehäuses (10) angeordnet ist bzw. sind.

Gemäß einer weiteren Ausführungsform ist dabei die Kühlvorrichtung zum Kühlen des Gehäuseinnenraums auf eine Temperatur im Bereich zwischen 2° Celsius und 7° Celsius ausgelegt.

Gemäß einer weiteren Ausführungsform kann zumindest eine der Belag-Ausgabevorrichtungen auf Temperaturen unterhalb von 0° Celsius abgekühlt werden.

Gemäß einem weiteren Gesichtspunkt der vorliegenden Erfindung wird ferner ein Verfahren zur Herstellung eines flachen, mit verschiedenen Belägen belegten Teiggebäcks, insbesondere einer Pizza, mittels einer Vorrichtung bereitgestellt, die eine Mehrzahl von in einer Matrixanordnung entlang von zwei zueinander orthogonalen Raumrichtungen verteilt angeordneten Belag-Ausgabevorrichtungen sowie eine bewegliche Positionierungseinrichtung umfasst, die vertikal unterhalb einer von den Belag-Ausgabevorrichtungen aufgespannten Ebene vorgesehen ist und der ein bevorzugt drehbeweglich gelagerter Teigträger zugeordnet ist. Bei diesem Verfahren wird ein Teig auf den Teigträger aufgebracht und der Teigträger sequenziell unterhalb von ausgewählten Belag-Ausgabevorrichtungen positioniert, wobei die Ausgabe von Belag durch die jeweilige Belag-Ausgabevorrichtung nur dann ausgelöst wird, wenn der Teigträger in vorbestimmter Weise relativ zu der jeweiligen Belag-Ausgabevorrichtung positioniert ist.

Gemäß einer weiteren Ausführungsform wird die Ausgabe von Belag durch eine Belag-Ausgabevorrichtung durch Positionieren des Teigträgers unterhalb der Belag-Ausgabevorrichtung sowie durch Anheben des Teigträgers bis zum Erreichen eines vorbestimmten maximalen Abstands oder eines verschwindenden Abstands zwischen dem Teigträger und einem unteren Ende der Belag-Ausgabevorrichtung ausgelöst.

Gemäß einer weiteren Ausführungsform wird die Belag-Ausgabevorrichtung jeweils passiv von der Positionierungseinrichtung und/oder dem Teigträger angetrieben, um Belag auszugeben.

Gemäß einer weiteren Ausführungsform wird die Ausgabe von Belag durch den gegenseitigen Eingriff des Teigträgers und/oder der Positionierungseinrichtung mit einem unteren Ende einer Belag-Ausgabevorrichtung ausgelöst.

Gemäß einer weiteren Ausführungsform ist eine der Belag-Ausgabevorrichtungen zum Ausgeben von kreisrunden Hartwurstscheiben, insbesondere von Salamischeiben (in den USA: peperoni slices), ausgelegt, wobei ein Vorrat für kreisrunde Hartwurstscheiben insbesondere ein Salamischeibenvorrat, zum Ausgeben der Hartwurstscheiben, insbesondere von Salamischeiben, exzentrisch zu dem Teigträger positioniert ist und eine Mehrzahl von Hartwurstscheiben durch Drehen des Teigträgers um seine Drehachse entlang von zumindest einem konzentrischen Umkreis auf dem Teig verteilt ausgegeben werden. Eine solche exakte Anordnung von Belägen, wie beispielsweise Hartwurstscheiben, bevorzugt von Salamischeiben, auf einem oder mehreren konzentrischen Kreisen konnte gemäß dem Stand der Technik bisher nicht realisiert werden.

Gemäß einer weiteren Ausführungsform werden die Hartwurstscheiben unter vorbestimmten konstanten Winkelabständen entlang des jeweiligen konzentrischen Umkreises verteilt angeordnet.

Gemäß einer weiteren Ausführungsform ist der Hartwurstscheibenvorrat radial verstellbar oder umfasst dieser eine Mehrzahl von in unterschiedlichen Radialstellungen angeordneten Hartwurstscheiben-Ausgabemitteln, so dass durch Drehen des Teigträgers um seine Drehachse die Hartwurstscheiben entlang von zumindest zwei konzentrischen Umkreisen mit unterschiedlichen Radien verteilt auf den Teig ausgegeben werden.

Gemäß einer weiteren Ausführungsform umfasst der Hartwurstscheibenvorrat zumindest einen Hartwurstzylinder, bevorzugt einen Salamizylinder (im Englischen: peperoni cylinder), und werden die Salamischeiben durch ein Schneidemittel von dem jeweiligen Hartwurstzylinder abgetrennt, wobei das Schneidemittel durch Drehen des Teigträgers drehangetrieben wird.

Gemäß einer weiteren Ausführungsform werden jeweils drei kreisrunde Hartwurstscheiben, insbesondere Salamischeiben, in zwei oder mehr punktsymmetrischen Anordnungen mit jeweils dreizähliger Symmetrie, die jeweils unter konstanten Winkelabständen zueinander ausgerichtet sind, auf zwei oder mehr konzentrischen Umkreisen auf dem Teig verteilt angeordnet.

Gemäß einer weiteren Ausführungsform werden vier kreisrunde Hartwurstscheiben, insbesondere Salamischeiben, in zwei oder mehr punktsymmetrischen Anordnungen mit jeweils vierzähliger Symmetrie, die jeweils unter konstanten Winkelabständen zueinander ausgerichtet sind, auf zwei oder mehr konzentrischen Umkreisen auf dem Teig verteilt angeordnet.

Gemäß einer weiteren Ausführungsform werden insgesamt neun kreisrunde Hartwurstscheiben, insbesondere Salamischeiben, auf dem Teig verteilt angeordnet werden, wobei jeweils drei Hartwurstscheiben in zwei punktsymmetrischen Anordnungen mit jeweils dreizähliger Symmetrie mit einem Winkelabstand von 45° relativ zu einander auf einem ersten Umkreis und drei weitere Hartwurstscheiben in einer weiteren versetzten punktsymmetrischen Anordnung mit dreizähliger Symmetrie auf einem zweiten konzentrischen Umkreis mit einem anderen Radius verteilt angeordnet werden.

Ein weiterer Gesichtspunkt der vorliegenden Erfindung betrifft ein flaches Teiggebäck, insbesondere Pizza, mit verschiedenen darauf verteilt angeordneten Belägen, bevorzugt hergestellt nach dem vorstehend beschriebenen Verfahren, mit einer Mehrzahl darauf verteilt angeordneten kreisrunden Hartwurstscheiben, insbesondere Salamischeiben. Erfindungsgemäß sind jeweils drei Hartwurstscheiben in zwei oder mehr punktsymmetrischen Anordnungen mit jeweils dreizähliger Symmetrie, die jeweils unter konstanten Winkelabständen zueinander ausgerichtet sind, auf zwei oder mehr konzentrischen Umkreisen auf dem Teiggebäck verteilt angeordnet.

Ein weiterer Gesichtspunkt der vorliegenden Erfindung betrifft ein flaches Teiggebäck, insbesondere Pizza, mit verschiedenen darauf verteilt angeordneten Belägen, bevorzugt hergestellt nach dem vorstehend beschriebenen Verfahren, mit einer Mehrzahl darauf angeordneten kreisrunden Hartwurstscheiben, insbesondere Salamischeiben. Erfindungsgemäß sind vier Hartwurstscheiben in zwei oder mehr punktsymmetrischen Anordnungen mit jeweils vierzähliger Symmetrie, die jeweils unter konstanten Winkelabständen zueinander ausgerichtet sind, auf zwei oder mehr konzentrischen Umkreisen auf dem Teiggebäck verteilt angeordnet.

Ein weiterer Gesichtspunkt der vorliegenden Erfindung betrifft ein flaches Teiggebäck, insbesondere Pizza, mit verschiedenen darauf verteilt angeordneten Belägen, bevorzugt hergestellt nach dem vorstehend beschriebenen Verfahren, mit einer Mehrzahl von darauf angeordneten kreisrunden Hartwurstscheiben, insbesondere Salamischeiben. Erfindungsgemäß sind neun Hartwurstscheiben auf dem Teiggebäck verteilt angeordnet werden, wobei jeweils drei Hartwurstscheiben in zwei punktsymmetrischen Anordnungen mit jeweils dreizähliger Symmetrie mit einem Winkelabstand von 45° relativ zu einander auf einem ersten Umkreis und drei weitere Hartwurstscheiben in einer weiteren versetzten punktsymmetrischen Anordnung mit dreizähliger Symmetrie auf einem zweiten konzentrischen Umkreis mit einem anderen Radius verteilt angeordnet.

### Figurenübersicht

Nachfolgend wird die Erfindung in beispielhafter Weise und unter Bezugnahme auf die beigefügten Zeichnungen beschrieben werden, woraus sich weitere Merkmale, Vorteile und zu lösende Aufgaben ergeben werden und worin:
- Fig. 1a und 1b: in einer schematischen Seitenansicht und Draufsicht eine Vorrichtung gemäß der vorliegenden Erfindung zeigen;
- Fig. 2a und 2b: in einer schematischen Schnittansicht und in einer Seitenansicht Einzelheiten der Positionierungseinrichtung der Vorrichtung gemäß den Fig. 1a und 1b einschließlich einer Hubeinrichtung zum Anheben und Absenken eines Teigträgers zeigen;
- Fig. 3: in einem schematischen Blockdiagramm die wesentlichen Elemente der erfindungsgemäßen Vorrichtung einschließlich einer Steuereinrichtung zeigt;
- Fig. 4: in einem schematischen Flussdiagramm die Schritte des erfindungsgemäßen Verfahrens zusammenfasst;
- Fig. 5a-5c: in schematischen Draufsichten eine gemäß dem erfindungsgemäßen Verfahren hergestellte Pizza mit der erfindungsgemäßen Anordnung von Salami- bzw. Hartwurstscheiben zeigen; und
- Fig. 6a und 6b: jeweils in einer schematischen Draufsicht eine am unteren Ende eines Vorratsbehälters vorgesehene Ausgabeschablone zeigen.

In den Figuren bezeichnen identische Bezugzeichen identische oder im Wesentlichen gleichwirkende Elemente oder Elementgruppen.

### Ausführliche Beschreibung eines bevorzugten Ausführungsbeispiels

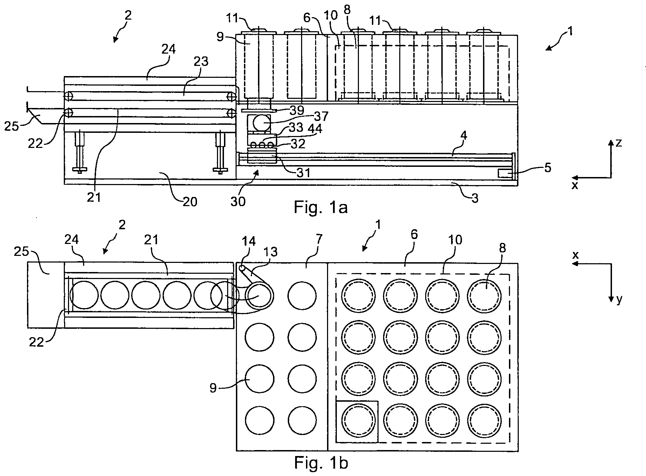

Gemäß der Fig. 1a umfasst die insgesamt mit dem Bezugszeichen 1 bezeichnete Herstellungsvorrichtung eine Mehrzahl von Behältern 8, 9, deren untere Enden im Wesentlichen fluchtend angeordnet sind und somit eine Ebene aufspannen. Wie aus den Fig. 1a und 1b ersichtlich ist, sind die Mehrzahl von Behältern 8, 9 in einer rechteckförmigen Matrixanordnung entlang von zwei zueinander orthogonalen Raumrichtungen x, y verteilt angeordnet. Die Abstände zwischen den Behältern 8,9 in den Raumrichtungen x,y sind konstant, was die Positionierung des Pizzateigs erheblich vereinfacht. Nach oben sind die Behälter 8,9 mit einem Deckel 11 verschlossen, was jedoch nicht zwingend erforderlich ist. Zumindest ein Teil der Behälter 8, 9 kühlt die darin aufgenommenen Zutaten auf geeignete Temperaturen, etwa wie von Hygienevorschriften gefordert, beispielsweise auf Temperaturen im Bereich zwischen etwa 2° Celsius und 7° Celsius, oder auch auf Tiefkühltemperaturen zur Ausgabe von tiefgekühlten Zutaten, beispielsweise Käsewürfeln. Alternativ kann zumindest ein Teil der Behälter in einem gekühlten Gehäuse untergebracht sein, beispielsweise in dem mit gestrichelten Linien angedeuteten Gehäuse 10 gemäß der Fig. 1a. Ganz besonders bevorzugt ist die gesamte Pizza-Belegevorrichtung 1 in einem gekühlten Raum untergebracht, so dass es nicht erforderlich ist, die Behälter 8, 9 individuell zu kühlen. Für Anwendungen in der Erlebnisgastronomie kann die gesamte Vorrichtung auch so in einem gekühlten Raum untergebracht sein, dass zumindest Teile der Vorrichtung, insbesondere die Pizza-Belegevorrichtung 1, von außen her von Besuchern eines Restaurants sichtbar sind. Ganz besonders bevorzugt auch so, dass auch die nachfolgend beschriebene Positionierungseinrichtung 30 von außen her von Besuchern eines Restaurants sichtbar ist.

Wie den Fig. 1a und 1b entnehmbar ist, sind die Behälter 8, 9 in einer möglichst dicht gepackten Matrixanordnung angeordnet, in der sich diese nahezu berühren können. In der Behältern 8, 9 sind unterschiedliche Beläge bzw. Zutaten aufbewahrt. Häufiger verwendete Zutaten, wie beispielsweise Tomatensauce und Käsewürfel, können dabei in bevorzugt angeordneten Behältern untergebracht sein, die zum Auffrischen von außen sehr leicht zugänglich sind, beispielsweise in den am linken Ende der Vorrichtung 1 angeordneten Behältern 9. Selbstverständlich können häufig verwendete Beläge auch in mehreren Behältern 8, 9 untergebracht sein. Wie dem Fachmann ohne Weiteres ersichtlich sein wird, kann das obere Ende der Behälter 8, 9 mit einem Versorgungsmechanismus verbunden sein um zu gewährleisten, dass die Behälter 8, 9 stets ausreichend gefüllt sind.

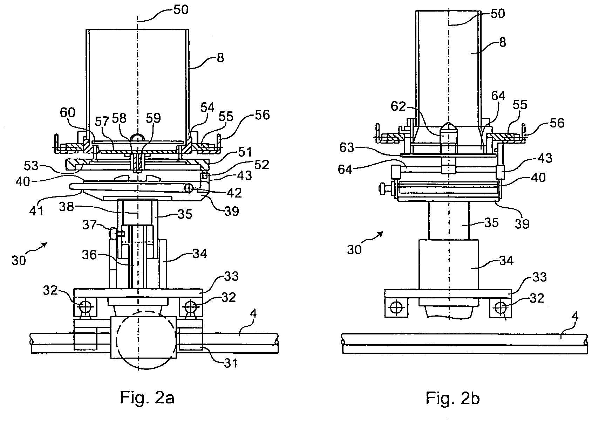

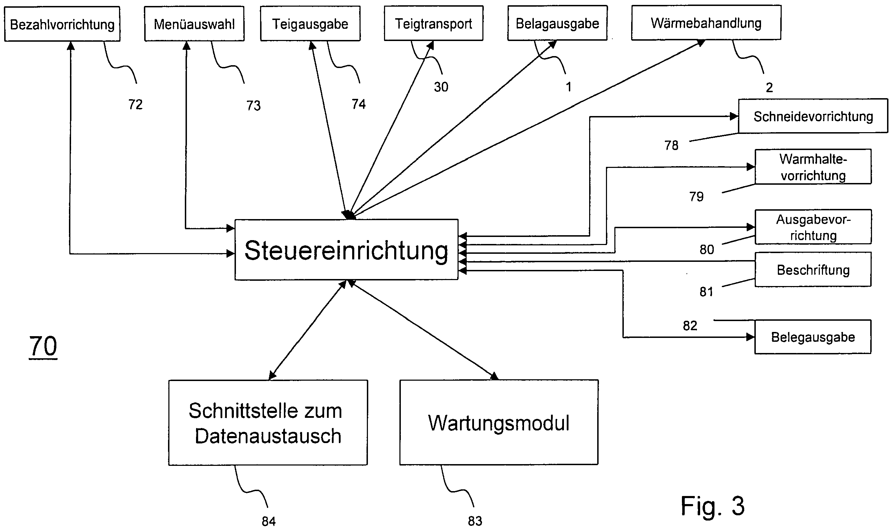

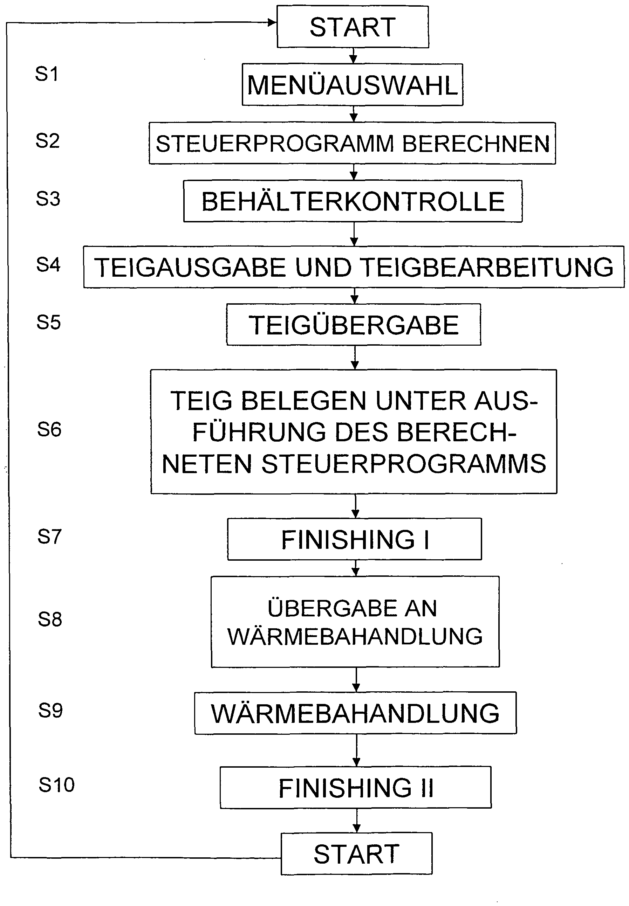

Gemäß der Fig. 1a ist die Vorrichtung 1 auf ein Gestell 3 aufgeständert, mit einem Freiraum unterhalb der von den Behältern 8, 9 aufgespannten Ebene. Auf dem Boden des Gestells 3 ist gemäß der Fig. 1a eine x-Längsführung 4, beispielsweise eine Führungsschiene, vorgesehen, in welcher der Wagen bzw. Schlitten 31 in x-Richtung geführt ist. Die x-Längsführung 4 ist parallel zu den x-Zeilen der Matrixanordnung von Behältern 8, 9 ausgerichtet, was die Positionierung des Teigträgers 39 erheblich vereinfacht. Auf dem Wagen bzw. Schlitten 31 sind zwei sich in y-Richtung erstreckende Führungsschienen 32 vorgesehen, entlang denen der Wagen 33 in y-Richtung geführt verstellt werden kann. Die Führungsschienen 32 sind exakt in y-Richtung und damit exakt parallel zu den y-Zeilen der Matrixanordnung von Behältern 8, 9 ausgerichtet, was die Positionierung des Teigträgers 39 erheblich vereinfacht. Dem x-Wagen 31 ist eine Antriebseinrichtung 5 zugeordnet, dem y-Wagen 33 ist eine y-Antriebseinrichtung 44 zugeordnet. Die Ansteuerung der Antriebseinrichtungen 5, 44 erfolgt durch ein in einer zentralen Steuereinrichtung 71 (vgl. Fig. 3) ablaufendes Steuerprogramm, das eine indexierte Verstellung der Wagen 31, 33 zum Positionieren des Teigträgers 39 in den zwei zueinander orthogonalen Raumrichtungen x, y in Entsprechung zu der Matrixanordnung von Behältern 8, 9 ermöglicht. Weitere Einzelheiten der Positionierungseinrichtung 30 werden nachfolgend ausführlicher anhand den Fig. 2a und 2b beschrieben.

Zur Herstellung einer Pizza wird zunächst ein geeigneter Pizzateig auf dem Teigträger 39 positioniert, wie nachfolgend ausführlicher beschrieben. Dies kann beispielsweise am rechten Ende der Belegevorrichtung 1 mittels einer nicht dargestellten Teigausgabestation erfolgen. Anschließend verfährt die Positionierungseinrichtung 30 den Teigträger 39 indexiert, in Entsprechung zu der Matrixanordnung der Behälter 8, 9 und gemäß einem Steuerprogramm, das die Verfahrwege in Entsprechung zu den jeweils aufzulegenden Belägen berechnet. Dabei wird grundsätzlich eine Minimierung des Gesamtverfahrwegs angestrebt. Das Problem des sequenziellen Ansteuerns der Behälter 8, 9 zur Belagausgabe ist dabei vergleichbar zu dem bekannten "Traveling-Salesman-Problem", so dass zur Berechnung des Verfahrwegs entsprechende Optimierungsalgorithmen eingesetzt werden können. Die so berechneten Verfahrwege können auch im Voraus in einem Speichermodul der zentralen Steuereinrichtung abgespeichert werden, wie nachfolgend noch ausführlicher beschrieben.

Nachdem der Teigträger 39 sequenziell unter die entsprechenden Behälter 8, 9 zur Belagausgabe gefahren wurde und alle gewünschten Beläge auf dem Pizzateig geeignet positioniert worden sind, fährt die Positionierungseinrichtung 30 schließlich in eine vordere Eckstellung, wo ein um eine vertikale Schwenkachse 14 schwenkbeweglicher Schieber 13 die fertig belegte Pizza schließlich auf ein Förderband 21 des nach geordneten Pizzaofens 2 schiebt. Das Förderband 21 bewegt sich mit geeigneter Geschwindigkeit in x-Richtung, so dass die Pizza in dem Ofeninnenraum 24 mittels der Heizeinrichtung 23 geeignet gebacken wird. Schließlich erreicht die fertig gebackene Pizza die vordere Transportrolle 22 des Förderbands 21, wo in der bekannten Weise eine Ausgabeeinrichtung und Nachbearbeitungsstation 25 vorgesehen ist, wie nachfolgend ausführlicher beschrieben.

Die Dimensionsangaben in Millimetern in den Fig. 1a und 1b sind lediglich beispielhaft. Es lässt sich jedoch daraus folgern, dass erfindungsgemäß eine Vorrichtung zum Herstellen von Pizzen mit sehr kompaktem Aufbau realisiert werden kann. Gemäß der Fig. 1b sind die 24 Behälter 8, 9 auf einer Grundfläche von nur 1.700 x 2.500 mm angeordnet. Die Vorrichtung kann somit ohne weiteres auch in kleinen Restaurants betrieben werden.

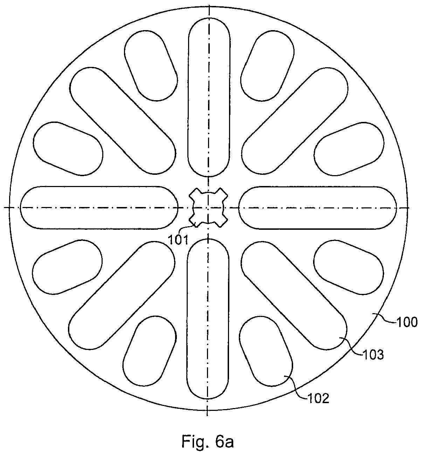

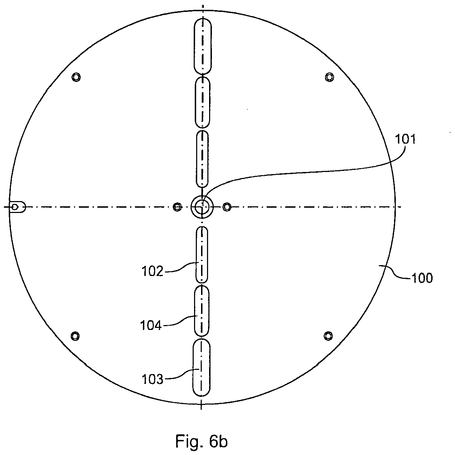

Nachfolgend werden die Positionierung des Teigträgers und die Ausgabe unterschiedlicher Beläge ausführlicher anhand der Fig. 2a, 2b, 6a und 6b beschrieben werden. Gemäß der Fig. 2a ist auf dem y-Wagen 33 der Positionierungseinrichtung 30 eine Hubeinrichtung zum Anheben und Absenken des plattenförmigen Teigträgers 39 in z-Richtung angeordnet. Die Hubeinrichtung ist eine hydraulische Hubeinrichtung und umfasst einen oberen Hubzylinder 35, der in z-Richtung längs verschiebbar in einem Ölbad in dem unteren Hubzylinder 34 gelagert ist. Die Hubstange 36 dient zur Vertikalverstellung des oberen Hubzylinders 35 in der bekannten Weise. Wegen der Hydraulik kann der Teigträger 39 in vertikaler Richtung sehr stark belastet werden, was von Vorteil ist, wenn so genannte freigeschobene Pizzateige verwendet werden, die aus einem Rohteigling unter vertikalem Stampfen und Kneten auf dem Teigträger 39 zu einem Pizzateig umgeformt werden. Am oberen Ende des Teigträgers 39 ist eine flache Auflagefläche 40 vorgesehen, auf die der Pizzateig (nicht dargestellt) flach aufgebracht wird. Bevorzugt liegt der Teig dabei unmittelbar auf der Auflagefläche 40 oder auf einem dieses teilweise oder bevorzugt auch vollständig überspannenden Förderband auf. In der Fig. 2a ist dieses Förderband, das dem späteren Abtransport des fertig belegten Pizzateig dient, nur schematisch durch das Bezugszeichen 41 angedeutet. Genauer gesagt ist das Förderband 41 um eine Antriebsrolle 42 und mehrere angetriebene Rollen endlos geführt. Durch Aktivieren der Antriebsrolle 42 wird der Weitertransport der fertig belegten Pizza ausgelöst. Gemäß der Fig. 2a ist das Förderband 41 versenkt in einem in der Auflagefläche 40 ausgebildeten Längsschlitz angeordnet, so dass das obere Trum des Förderbands 41 an der Unterseite des Pizzateigs anliegt. Zum Abtransport des Pizzateigs können die Rollen des Förderbands 41 auch in der z-Richtung geringfügig verstellbar sein. Gemäß einer alternativen Ausführungsform (nicht gezeigt) kann in der Auflagefläche 40 des Teigträgers 39 auch zumindest ein Längsschlitz vorgesehen sein, in dem eine sich tangential zum runden Teigträger 39 erstreckende Förderwalze versenkt angeordnet ist, so dass die Umfangsfläche der Förderwalze die Unterseite des Pizzateigs gerade berührt. Selbstverständlich können auch zwei derartige Förderwalzen zueinander orthogonal ausgerichtet, das heißt eine Förderwalze tangential und eine Förderwalze radial ausgerichtet, vorgesehen sein, so dass der fertig belegte Pizzateig nicht nur radial abtransportiert werden kann sondern die noch nicht fertig belegte Pizza mittels des Walzenpaars auch auf der Auflagefläche 40 um die Drehachse 38 gedreht werden kann.

Bei der Ausführungsform gemäß der Fig. 2a ist der Teigträger 39 drehbeweglich um die vertikale Drehachse 38 auf dem oberen Hubzylinder 35 gelagert. Alternativ oder ergänzend kann auch der obere Hubzylinder 35 drehbeweglich gelagert sein. Dem Teigträger 39 ist ein Drehantrieb 37 zugeordnet, der von der zentralen Steuereinrichtung (vgl. Fig. 3) geeignet angesteuert wird, um den Teigträger 39 und den auf dessen Auflagefläche 40 aufliegenden Pizzateig in geeigneter Weise um die vertikale Drehachse 38 zu drehen

Bei dem Ausführungsbeispiel gemäß der Fig.2a wird die Ausgabe von Belag aus dem Behälter 8 nur dann ausgelöst, wenn der Teigträger 39 bis zum Erreichen eines vorbestimmten maximalen Abstands oder eines nahezu verschwindenden Abstands zwischen der Auflagefläche 40 bzw. der Oberseite des darauf angeordneten Pizzateigs und einem unteren Ende des Behälters mit einer darin vorgesehenen Belag-Ausgabevorrichtung, wie nachfolgend ausführlicher beschrieben, angehoben wird. Mit anderen Worten, in der Ruhestellung der Hubeinrichtung, in der der Teigträger 39 vertikal nach unten gefahren ist, wird der Teigträger 39 in x, y-Richtung in Entsprechung zu der Matrixanordnung von Behältern indexiert verfahren, bis der Teigträger 39 exakt unterhalb des von dem jeweils ablaufenden Steuerprogramm angeforderten Behälters 8 positioniert ist. Anschließend hebt die Hubeinrichtung den Teigträger 39 mit dem auf dessen Auflagefläche 40 aufliegenden Pizzateig exakt vertikal an, um die Ausgabe von Belag bzw. Zutaten auszulösen.

Bei dem Ausführungsbeispiel gemäß der Fig. 2a wird die für die Ausgabe von Belag zuständige Belag-Ausgabevorrichtung passiv durch Verstellen des Teigträgers 39 in der vertikalen Richtung (z) und/oder durch Drehen des Teigträgers 39 um die vertikale Drehachse 38 angetrieben. Aufgrund des vertikalen Anhebens des Teigträgers 39 liegt nur ein geringer Abstand zwischen dem Teigträger 39 und dem unteren Ende des Behälters 8 vor, was das Risiko von Verschmutzungen der Vorrichtung minimiert. Gemäß alternativen Ausführungsformen (nicht gezeigt), kann die Stellung, insbesondere Höhenstellung, des Teigträgers 39 auch detektiert bzw. gefühlt werden und die Ausgabe von Belag durch eine jeweils dem Behälter zugeordnete Steuereinrichtung elektronisch ausgelöst werden, was jedoch aufwendiger ist. Zum Fühlen der Stellung des Teigträgers 39 eignen sich grundsätzlich beliebige mechanische, elektronische, optische, insbesondere optoelektronische, oder magnetische Fühleinrichtungen, wie dem Fachmann aus dem Stand der Technik hinreichend bekannt.

Nachfolgend wird anhand der Figuren 2a und 2b das Auslösen der Belagausgabe durch geeignete Höhenverstellung des Teigträgers näher erläutert werden. Bei dem Ausführungsbeispiel gemäß der Fig. 2a ist eine am unteren Ende des Behälters 8 vorgesehene Belag-Ausgabevorrichtung dann mechanisch mit dem Teigträger 39 und der Positionierungseinrichtung 30 gekoppelt, wenn eine geeignete Positionierung des Teigträgers 39 in der xy-Ebene und in vertikaler Richtung (z) erzielt ist. Zur mechanischen Kopplung sind an dem Teigträger 39 und am unteren Ende des Behälters 8 geeignete mechanische Kopplungsmittel vorgesehen, die in geeigneter Weise zusammen wirken, um die Belagausgabe zu erwirken. Dem Fachmann werden beim Studium der vorliegenden Anmeldung zahlreiche mögliche Varianten für eine solche mechanische Kopplung ohne weiteres ersichtlich sein. Als Beispiel offenbart die Fig. 2a einen Formschluß von Elementen, wonach am Umfangsrand des plattenförmigen Teigträgers 39 zumindest ein vertikaler Fortsatz 43 mit einer darin ausgebildeten Aussparung vorgesehen ist. Bevorzugt sind mehrere solcher Fortsätze 43, zweckmäßig unter konstanten Winkelabständen, verteilt um den Umfang des Teigträgers 39 herum angeordnet. Gemäß der Fig. 2a ist am unteren Ende des Behälters 8 eine Behälteraufnahme 54 mit zumindest einem von diesem radial abragenden Fortsatz 55 vorgesehen. Die Behälteraufnahme 54 ist mit einem Flansch 51 verbunden, an dessen Umfangsrand sich zumindest ein Rastvorsprung 52 abwärts erstreckt, mit einem korrespondierend zu der Aussparung in dem Fortsatz 43 ausgebildeten Dorn. Wenn der Dorn am vorderen Ende des Fortsatzes 51 formschlüssig in die Aussparung des Fortsatzes 43 eingreift und der Teigträger 39 weiter vertikal angehoben wird, ist schließlich die Belag-Ausgabevorrichtung am unteren Ende des Behälters 8 mechanisch mit dem Teigträger 39 und der Positionierungseinrichtung 30 gekoppelt.

Genauer gesagt, ist gemäß der Fig. 2a der Flansch 51 so mit dem unteren Ende des Behälters 8 gekoppelt, dass durch weiteres Anheben des Teigträgers 39 die Düse 58 am Behälterboden 57 freigegeben wird, um Tomatensauce oder ein vergleichbares pastöses Produkt auf den Teig auszugeben, und zwar entweder an der in der Fig. 2a dargestellten Position oder verteilt auf den gesamten Teig mittels mehrerer Ausgabeöffnungen. Die vorgenannte mechanische Kopplung kann auch mit einem im Behälter 8 vorgesehenen Dosierboden 60 erfolgen, der mit einem Verschluss 59 am Ausgabeende der Düse 58 gekoppelt ist, so dass aus der Düse 58 oder den mehreren Ausgabeöffnungen im Behälterboden 57 eine vorbestimmte Menge an Tomatensauce bzw. Produkt ausgegeben wird. Diese Menge kann insbesondere auch durch die vertikale Stellung des Teigträgers 39 beeinflusst werden.

Bei dem Ausführungsbeispiel gemäß der Fig. 2a kann der ausgegebene Belag durch Drehen des Teigträgers 39 um die vertikale Drehachse 38 auch weiter vergleichmäßigt werden. Diese Drehung kann während oder im Anschluss an die Ausgabe des Belags erfolgen. Zu diesem Zweck ist bei diesem Ausführungsbeispiel auf der Unterseite des Flansches 51 eine ringförmige Innenoberfläche vorgesehen, die in geeigneter vertikaler Stellung des Teigträgers 39 nahezu in Anlage gelangt mit dem ausgegebenen Belag. Im Falle der Ausgabe von Tomatensauce würde beispielsweise die lichte Weite zwischen der Oberseite des Pizzateigs und der Innenoberfläche 53 vergleichsweise gering gewählt werden. In dieser geeignet gewählten vertikalen Stellung kann dann durch Verdrehen des Teigträgers 39 mit dem darauf drehfest gelagerten Teig (nicht gezeigt) die Vergleichmäßigung des Belags in Umfangsrichtung, bevorzugt über die gesamte Fläche, des Teigs erzielt werden.

Zur Ausgabe von granularen, gekörnten oder gehackten Belägen können mit der erfindungsgemäßen Vorrichtung durchaus sehr unterschiedliche Ausgabebedingungen realisiert werden, da ja die Höhen- und Winkelstellung des Teigträgers 39 sehr variabel eingestellt werden kann. Zur Ausgabe der letztgenannten Produkte aus einem Vorratsbehälter kann es beispielsweise zweckmäßig sein, dass durch mechanische Kopplung des Teigträgers mit dem unteren Ende des Vorratsbehälters, beispielsweise in der vorgenannten mechanischen Weise, ein Verschlussglied am Behälterboden freigegeben bzw. angehoben, weggeklappt, weggedreht oder dergleichen, wird und dann der Belag in dosierter Weise abgegeben wird. Zur Dosierung des Belags kann beispielsweise am unteren Ende im Behälterinnenraum eine Ausgabeschablone vorgesehen sein, die nachfolgend anhand der Fig. 6a und 6b ausführlicher beschrieben werden soll.

Gemäß der Fig. 6a weist die Ausgabeschablone 100, die korrespondierend zum Innenquerschnitt des zugehörigen Behälters kreisförmig ausgebildet ist, eine Mehrzahl von Aussparungen 102, 103 unterschiedlicher Größe auf. Durch diese Aussparungen 102, 103 kann in dem Behälter aufbewahrter Belag vertikal nach unten herabfallen. Die Ausgabeschablone 100 ist dabei an der Drehmitte 101 drehbeweglich um die Behälterlängsachse 50 (vgl. Fig. 2a) und die dazu fluchtende vertikale Achse 38 des Teigträgers 39 (vgl. Fig. 2a) gelagert. Der Drehantrieb der Ausgabeschablone kann durch einen gesondert vorgesehen Drehantrieb am Behälter selbst erfolgen, was jedoch aufwendig wäre. Bevorzugt wird deshalb, dass die Ausgabeschablone passiv durch Drehen des Teigträgers 39 angetrieben wird, wozu eine mechanische Kopplung von Teigträger und Ausgabeschablone, beispielsweise in der vorgenannten Weise, vorgesehen sein kann. Wie dem Fachmann ohne weiteres ersichtlich sein wird, kann dabei die Belag-Ausgaberate durch einfache Parameter, wie beispielsweise die Anordnung und Winkelstellung der Aussparungen, durch die Dicke der Scheibe 100 und/oder durch die Drehgeschwindigkeit der Scheibe 100 geeignet beeinflusst werden, beispielsweise mittels des in der zentralen Steuereinrichtung ablaufenden Steuerprogramms.

Nach geeigneter Ausgabe von Belag wird durch rasches Absenken des Teigträgers die Ausgabeschablone 100 außer Eingriff mit dem Teigträger gebracht und gleichzeitig das am Behälterboden vorgesehene Verschlussglied zum Verschließen des Behälters aktiviert. Die Fig. 6b zeigt ein weiteres Beispiel für eine Ausgabeschablone, bei der jeweils drei Paare von Aussparungen unterschiedlicher Größe 102-104 radial fluchtend angeordnet sind. Gemäß der Fig. 6b ist die Öffnungsweise der Aussparungen 102-104 umso größer, je weiter radial außen die jeweilige Aussparung vorgesehen ist. Auf diese Weise kann eine sehr konstante Menge an Belag, insbesondere Saucenbelag oder pastösen Belag, verteilt über die gesamte Fläche des Teigs ausgegeben werden, wenn die Ausgabeschablone 100 und der Teig zur Belagausgabe relativ zu einander gedreht werden.

Die Fig. 2b zeigt ein weiteres Beispiel für eine mechanische Kopplung des Teigträgers mit einer Belag-Ausgabevorrichtung. Dabei ist oberhalb des in der vorstehend beschriebenen Weise zur mechanischen Kopplung dienenden Querbalkens 64 eine Schneidklinge 63 vorgesehen, mit dem von einem in dem Behälter 8 aufbewahrten Salamizylinder durch Drehen der Schneidklinge 63 eine Salamischeibe abgeschnitten wird. Die Drehbewegung der Schneidklinge 63 wird dabei passiv durch Drehen des Teigträgers 39 angetrieben. In entsprechender Weise können auch Scheiben von beliebigen anderen Hartwurstzylindern abgeschnitten werden.

Durch das erfindungsgemäße Merkmal, wonach der Teigträger unabhängig um die vertikale Drehachse gedreht werden kann, lässt sich erfindungsgemäß eine besonders zweckmäßige Anordnung von kreisrunden Hartwurstscheiben, wie beispielsweise Salamischeiben, auf einem Pizzaboden realisieren. Diese Anordnung kann dabei nicht nur besonders ästhetisch auf den Kunden wirken, was den Verkaufswert der Pizza erhöhen kann, sondern dient zusätzlich auch technischen Zwecken. Insbesondere kann durch eine besonders vergleichmäßigte Anordnung von Hartwurstscheiben beim Backen im Pizzaofen eine besonders gleichmäßige Verkrustung der Pizza erzielt werden. Auch der Geschmack kann durch eine besonders vergleichmäßigte Anordnung der Hartwurstscheiben erheblich verbessert werden. Schließlich lässt sich durch optimiert verteilte Anordnung von Hartwurstscheiben auf dem Pizzateig auch eine deutliche Kostenersparnis realisieren.

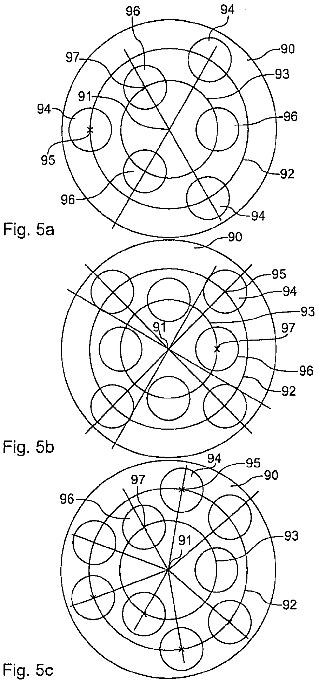

Die Fig. 5a-5c fassen drei erfindungsgemäß bevorzugte Anordnungen von Hartwurstscheiben, insbesondere von Salamischeiben, auf einem Pizzateig zusammen. Gemäß der Fig. 5a sind auf dem kreisförmigen Pizzaboden 90 drei Hartwurstscheiben auf einem äußeren Umkreis 92, der konzentrisch zur Drehmitte 91 des Pizzabodens 90 ist, unter gleichmäßigen Winkelabständen angeordnet und sind drei weitere Salamischeiben 96 auf einem weiteren konzentrischen Umkreis 93 mit kleinerem Radius ebenfalls unter gleichmäßigen Winkelabständen angeordnet. Die Anordnung der Salamischeiben 94, 96 auf den Umkreisen 92, 93 lässt sich durch zentrische Anordnung des Pizzabodens 90 auf dem Teigträger und durch Drehen des Teigträgers zur Ausgabe der Salamischeiben aus einem Behälter realisieren, wobei darauf zu achten ist, dass die Drehmitte 91 des Pizzabodens 90 mit der Behälterlängsachse fluchtet. Insbesondere lässt sich die Anordnung von Salamischeiben auf unterschiedlichen Umkreisen auch dadurch realisieren, dass in dem Salamibehälter mehrere Salamizylinder exzentrisch und auf unterschiedlichen Radien zur Drehmitte 91 angeordnet sind, wobei die Schneidklinge die Salamischeiben beim Drehen des Teigträger gleichmäßig abschneidet. Selbstverständlich können auch mehrere Salami-Ausgabestationen exzentrisch zur Drehmitte 91 auf unterschiedlichen Radien vorgesehen sein.

Gemäß der Fig. 5a sind die Salamischeiben in zwei punktsymmetrischen Anordnungen mit jeweils dreizähliger Symmetrie auf zwei unterschiedlichen konzentrischen Umkreisen verteilt angeordnet, und zwar unter jeweils konstanten Winkelabständen. Die von der Salamischeiben 94 gebildete Anordnung ist dabei entsprechend der dreizähligen Symmetrie um 45° relativ zu der von den Salamischeiben 96 ausgebildeten Anordnung versetzt.

Die Fig. 5b zeigt eine entsprechende Anordnung von insgesamt 8 Salamischeiben 94, 96 auf dem Teigboden 90 und die Fig. 5c zeigt eine vergleichbare Anordnung von insgesamt 9 Salamischeiben 94, 96 auf dem Teigboden 90.

Wie dem Fachmann ohne weiteres ersichtlich sein wird, können in entsprechender Weise auch kreisrunde Scheiben von beliebigen anderen Hartwurstarten bereitet und auf dem Teig positioniert werden.

Nachfolgend werden die Steuerung und der Betrieb der erfindungsgemäßen Vorrichtung anhand der Fig. 3 und 4 beispielhaft beschrieben. Gemäß der Fig. 3 umfasst die Vorrichtung eine Prozesssteuerung 70 mit einer zentralen Steuereinrichtung 71, beispielsweise einer CPU, die zentral alle Stationen der Vorrichtung ansteuert. Dabei wird die Prozesssteuerung nachfolgend anhand eines Beispiels beschrieben werden, das für Franchising-Konzepte für Fastfood-Pizzarestaurants geeignet ist. Dementsprechend umfasst die Prozesssteuerung eine zentrale Menüauswahl 73, in der die unterschiedlichen Sorten von Pizzen und/oder Belägen usw. übersichtlich angezeigt werden. Dies kann beispielsweise mit Hilfe einer Bildschirmanzeige, insbesondere eines berührungsempfindlichen Bildschirms, erfolgen. Die Menüauswahl 73 kann entweder, wie in Fastfood-Restaurants üblich, durch einen Servicemitarbeiter bedient werden oder bei anderen Ausführungsformen durch den Endverbraucher selbst. Auf der Menüauswahl 73 werden eine Mehrzahl von Auswahlfeldern angezeigt, die zur Auswahl betätigt, beispielsweise berührt, werden müssen. Die Menüauswahlbefehle werden dann an die zentrale Steuereinrichtung 71 übermittelt, wo ein entsprechendes Steuerprogramm bereits in einem Speicher abgelegt ist oder selbiges berechnet wird.

Anschließend steuert die Steuereinrichtung 71 die Teigausgabestation 74 an, um einen Pizzateig geeigneter Konsistenz und Stärke auszugeben. Dabei kann der Pizzateig aus einem Teigling durch Kneten etc. geeignet geformt werden (sog. freigeschobener Pizzateig). Oder der Pizzateig kann als Tiefkühl-Pizzateig ausgegeben werden. Der ausgegebene Pizzateig kann vor dem Belegen auch in einem Ofen vorgebacken werden. Der Pizzateig wird dabei unmittelbar auf dem drehbeweglichen Teigträger der Positionierungseinrichtung aufgebracht. Anschließend steuert die Steuereinrichtung 71 die Positionierungseinrichtung 30 geeignet an, um den Teig unterhalb von Ausgewählten der Behälter zu positionieren und die Belagausgabe in der vorstehend beschriebenen Weise auszulösen, insbesondere durch mechanische Kopplung des Teigträgers mit einer Belag-Ausgabevorrichtung am unteren Ende eines jeweiligen Behälters.

Nachdem schließlich die geeigneten Belag-Ausgabestationen durchlaufen sind, wird der fertig belegte Pizzateig an einen Ofen 2 übergeben, wo durch geeignete Weiterbehandlung die Pizza gebrauchsfertig aufgebacken wird. Anschließend wird die fertig gebackene Pizza an geeignete Nachbearbeitungsstationen übergeben, insbesondere eine Schneidevorrichtung 78 zur Portionierung, eine Warmhaltevorrichtung 79, um die fertig gebackene Pizza bis zur Verpackung oder dem Verzehr warm zu halten und/oder eine Ausgabevorrichtung 80. Letztere kann ausgelegt sein, um die Pizza in eine Warmhaltebox, eine Pappschachtel etc. einzulegen. Anschließend kann die Steuereinrichtung 71 eine Beschriftungseinheit 81 ansteuern, um eine geeignete Beschriftung aufzubringen, beispielsweise alphanumerische Zeichen oder einen Bar-Code. Ferner kann die zentrale Steuereinrichtung 71 eine Belegausgabe 82 ansteuern, um einen Beleg zu erstellen, der für das jeweilige Gastronomiekonzept geeignet ist, beispielsweise einen Papierbeleg, einen RF-Tag etc.

Für Self-Service-Anwendungen kann ferner eine Bezahlvorrichtung 72 vorgesehen sein, die Münzen, Geldscheine oder Nichtpapiergeld, wie beispielsweise EC-Karten oder Kreditkarten, zur Bezahlung akzeptiert und einen Prozess zur Herstellung einer Pizza nur dann freigibt, wenn der erforderliche Geldbetrag entrichtet ist.

Gemäß der Fig. 3 kann die zentrale Steuereinrichtung 71 ferner mit einem Wartungsmodul 83 gekoppelt sein, das den Betriebszustand der Anlage ständig überwacht und gegebenenfalls Wartungsmaßnahmen, insbesondere Selbstreinigungsprogramme, veranlasst, oder Wartungspersonal alarmiert. Ferner kann eine Schnittstelle 84 zum Datenaustausch, beispielsweise über das Internet oder eine Netzwerkverbindung, vorgesehen sein, über die wichtige Betriebsdaten der Prozesssteuerung 70 ausgetauscht und ständig überwacht werden können. Eine solche Schnittstelle kann insbesondere für ein effizientes Warenmanagement sorgen, so dass Zutaten bzw. Beläge und weitere Verbrauchsmaterialien, insbesondere Kartonagen, Belegvordrucke, Schneidmesser und dergleichen, rechtzeitig und automatisch bestellt werden können.

Die Fig. 4 fasst die wesentlichen Prozessschritte zur Herstellung einer Pizza übersichtlich zusammen. Zunächst erfolgt eine Menüauswahl (Schritt S1), so dass der Endverbraucher selbst oder Servicepersonal in der Art und Weise von Fastfood-Restaurants individuell eine herzustellende Pizza auswählt, insbesondere durch Auswahl der Zutaten und Beläge, der Teigdicke, der Menge der Zutaten bzw. Beläge, der Backparameter etc. Anschließend wird in dem Schritt S2 ein Steuerprogramm zum Ansteuern der Positionierungseinrichtung, der Hubeinrichtung, des Drehantriebs des Teigträgers und der Belag-Ausgabe-Vorrichtungen berechnet. Durch permanente Überwachung des Füllstands der Behälter (Schritt S3) wird ermittelt, ob die angeforderte Pizza auch tatsächlich hergestellt werden kann. Sollte dies nicht der Fall sein, wird das Programm angehalten bzw. der entsprechende Behälter auf Veranlassung der zentralen Steuereinrichtung von einer Versorgungsstation oder durch Behälterwechsel wieder aufgefüllt. Anschließend gibt das Steuerprogramm den Prozess zur Herstellung der Pizza frei, demzufolge in der vorstehend beschriebenen Weise der Pizzateig ausgegeben und bearbeitet wird (Schritt S4), dann an die Pizza-Belegevorrichtung übergeben wird (Schritt S5), dann mit den in der Menüauswahl (Schritt S1) ausgewählten Zutaten bzw. Belägen belegt wird, und zwar unter der Steuerung des auf der zentralen Steuerungseinrichtung ablaufenden Steuerprogramms, (Schritt S6), anschließend gegebenenfalls nachbearbeitet wird (Schritt S7), beispielsweise die Beläge bzw. Zutaten durch Drehen, Glattstreichen etc. vergleichmäßigt werden, die fertig belegte Pizza dann an eine Wärmebehandlungsstation, insbesondere Ofen, übergeben wird, (Schritt S8), die Wärmebehandlung erfolgt (Schritt S9) und anschließend in der vorstehend beschriebenen Weise eine geeignete Nachbearbeitung und Nachbehandlung der Pizza erfolgt (Schritt S10). Anschließend kehrt das Steuerprogramm in seinen Ausgangszustand zurück.

Wie dem Fachmann beim Studium der vorstehenden Beschreibung ohne weiteres ersichtlich sein wird, kann ein neuer Pizzateig, während ein vorheriger Pizzateig in der Pizza-Belegevorrichtung belegt, in der Wärmebehandlungsstation aufgebacken oder in der Nachbearbeitungsstation nachbearbeitet wird, bereits in der Teigausgabestation erstellt werden. Dies führt zu einer weiteren Verkürzung der Taktzeit der erfindungsgemäßen Vorrichtung. Selbstverständlich können beliebige Zutaten bzw. Beläge auf den Teig aufgebracht werden, beispielhaft seien angeführt: Saucen und andere pastöse Produkte, Gemüse, Fleisch, wie beispielsweise Salamischeiben (Englisch: peperoni slices), Schinkenscheiben, und Fisch. Die Zutaten bzw. Beläge können dabei bei Umgebungstemperatur oder bei tieferen Temperaturen, insbesondere auch Tiefkühltemperaturen, aufgebracht werden. Die Zutaten bzw. Beläge können in beliebiger Form und Menge und Anordnung auf den Teig aufgebracht werden, insbesondere auch als stückiges, granulares, körniges oder gehacktes Material. Selbstverständlich eignet sich die erfindungsgemäße Vorrichtung für beliebige Teiggeometrien, die nicht nur kreisrund sondern auch anders ausgestaltet sein können, insbesondere quadratisch oder drei- oder mehreckig.

### Bezugszeichenliste

- 1: Pizza-Belegevorrichtung
- 2: Ofen
- 3: Gestell
- 4: Längsführung
- 5: Antriebseinrichtung
- 6: Erster Belegeabschnitt
- 7: Zweiter Belegeabschnitt
- 8: Behälter / Ausgabevorrichtungen des ersten Belegeabschnittes
- 9: Behälter / Ausgabevorrichtungen des zweiten Belegeabschnittes
- 10: Gehäuse
- 11: Deckel

- 13: Übergabeeinrichtung / Schwenkschieber
- 14: Schwenkachse

- 20: Gestell
- 21: Förderband
- 22: Rollen
- 23: Heizeinrichtung
- 24: Ofeninnenraum
- 25: Ausgabeeinrichtung / Nachbearbeitungsstation

- 30: Teigpositionierungseinrichtung
- 31: Wagen / Schlitten (x-Richtung)
- 32: Führungsschienen (y-Richtung)
- 33: Wagen / Schlitten (y-Richtung)
- 34: Unterer Hubzylinder
- 35: Oberer Hubzylinder
- 36: Hubstange
- 37: Drehantrieb
- 38: Drehachse
- 39: Teigträger
- 40: Auflagefläche
- 41: Förderband
- 42: Antriebsrolle
- 43: Fortsatz / Auslöseeinrichtung
- 44: Antrieb für Wagen / Schlitten 33 (y-Richtung)

- 50: Behälterlängsachse
- 51: Flansch / Vergleichmäßigungsmittel
- 52: Rastvorsprung
- 53: Innenoberfläche des Flansches
- 54: Behälteraufnahme
- 55: Fortsatz
- 56: Anschlag
- 57: Behälterboden
- 58: Düse
- 59: Verschlussmittel / Düsenöffnung
- 60: Dosierboden

- 62: Zentrierdorn/Kopplungsglied
- 63: Verschlussboden mit Schneidemesser
- 64: Querbalken

- 70: Prozesssteuerung
- 71: Steuereinrichtung
- 72: Bezahlvorrichtung / Kartenleser
- 73: Menüauswähleinrichtung / Berührungsempfindlicher Bildschirm
- 74: Teigaufbereitungs- und -ausgabeeinrichtung

- 78: Teigschneideeinrichtung
- 79: Warmhaltevorrichtung
- 80: Teiggebäckausgabe- und -verpackungsstation
- 81: Beschriftungsstation
- 82: Belegausgabestation
- 83: Wartungsmodul
- 84: Schnittstelle zum Datenaustausch und/oder zur Fernsteuerung bzw. -überwachung

- 90: Pizza
- 91: Mitte der Pizza 90
- 92: Äußerer Umkreis
- 93: Innerer Umkreis
- 94: Salamistück auf äußerem Umkreis 92
- 95: Mitte des Salamistücks 94
- 96: Salamistück auf innerem Umkreis 93
- 97: Mitte des Salamistücks 96

- 100: Ausgabeschablone
- 101: Drehmitte
- 102: kleine Aussparung
- 103: große Aussparung
- 104: mittelgroße Aussparung

## Patentansprüche

1. Vorrichtung zur Herstellung eines flachen, mit verschiedenen Belägen (94, 96) belegten Teiggebäcks (90), mit:
einer Mehrzahl von Belag-Ausgabevorrichtungen (8, 9, 59, 62, 63) und
zumindest einer beweglichen Positionierungseinrichtung (30), die vertikal unterhalb einer von den Belag-Ausgabevorrichtungen aufgespannten Ebene vorgesehen ist und der ein Teigträger (39, 40) zugeordnet ist, wobei
die Positionierungseinrichtung (30) von einer Antriebseinrichtung (5) angetrieben ist, um den Teigträger (39, 40) zur Ausgabe von Belag unterhalb einer jeweiligen Belag-Ausgabevorrichtung (8, 9, 59, 62, 63) zu positionieren,
die Belag-Ausgabevorrichtungen (8, 9, 59, 62, 63) in einer Matrixanordnung (6, 7) entlang von zwei zueinander orthogonalen Raumrichtungen (x, y) verteilt angeordnet sind und
die Positionierungseinrichtung (30) zum Positionieren des Teigträgers (39, 40) in den zwei zueinander orthogonalen Raumrichttungen (x, y) in Entsprechung zu der Matrixanordnung ausgelegt ist,
**dadurch gekennzeichnet, dass** der Teigträger (39, 40) drehbeweglich gelagert und diesem ein Drehantrieb (37) zugeordnet ist, um den Teigträger (39, 40) um eine vertikale Drehachse (38) zu drehen.

2. Vorrichtung nach einem Anspruch 1, wobei die Positionierungseinrichtung (30) Führungsmittel (4, 32) zum Führen des Teigträgers (39, 40) entlang der zwei zueinander orthogonalen Raumrichtungen (x, y) sowie eine Steuerungseinrichtung (71) zum indexierten Ansteuern der Antriebseinrichtung (5) in Entsprechung zu der Matrixanordnung der Belag-Ausgabevorrichtungen (8, 9, 62, 63) aufweist.

3. Vorrichtung nach Anspruch 2, wobei das Führungsmittel für die jeweilige Raumrichtung (x, y) eine Führungsschiene (4, 32) und einen von der jeweiligen Führungsschiene geführten Wagen bzw. Schlitten (31, 33) umfasst.

4. Vorrichtung nach einem der vorhergehenden Ansprüche, wobei die Positionierungseinrichtung (30) ferner eine Hubeinrichtung (34-36) zum Anheben und Absenken des Teigträgers (39) umfasst, wobei die Ausgabe von Belag durch eine Belag-Ausgabevorrichtung (8, 9, 59, 62, 63) durch Positionieren des Teigträgers (39) unterhalb der Belag-Ausgabevorrichtung sowie durch Anheben des Teigträgers (39) bis zum Erreichen eines vorbestimmten maximalen Abstands oder eines verschwindenden Abstands zwischen dem Teigträger und einem unteren Ende der Belag-Ausgabevorrichtung ausgelöst wird.

5. Vorrichtung nach einem der vorhergehenden Ansprüche, wobei die Belag-Ausgabevorrichtungen (8, 9, 59, 62, 63) jeweils passiv von der Positionierungseinnchtung (30) und/oder dem Teigträger (39) angetrieben sind, um Belag auszugeben.

6. Vorrichtung nach einem der vorhergehenden Ansprüche, wobei die Positionierungseinrichtung (30) und die Belag-Ausgabevorrichtungen so ausgelegt sind, dass die Ausgabe von Belag durch die jeweilige Belag-Ausgabevorrichtung nur dann ausgelöst wird, wenn der Teigträger (39) in vorbestimmter Weise relativ zu der jeweiligen Belag-Ausgabevorrichtung positioniert ist.

7. Vorrichtung nach Anspruch 6, wobei der Teigträger (39) und/oder die Positionierungseinrichtung (30) ein Eingriffsmittel (43; 62) zum Eingriff in ein korrespondierend ausgebildetes Auslösemittel (51, 52; 59), das jeweils am unteren Ende der Belag-Ausgabevorrichtungen (8, 9) vorgesehen ist, aufweist, wobei die Belag-Ausgabevorrichtung so ausgelegt ist, dass Belag nur dann ausgegeben wird, wenn das Eingriffsmittel und das Auslösemittel sich im gegenseitigen Eingriff befinden bzw. zusammen wirken.

8. Vorrichtung nach einem der vorhergehenden Ansprüche, wobei im unteren Endbereich von zumindest einer Belag-Ausgabevorrichtung (8, 9) eine mit Aussparungen (102-104) versehene und um eine Behälterlängsachse (50) drehbeweglich gelagerte Scheibe (100) sowie ein Verschlussglied vorgesehen sind, so dass durch die Winkelstellung der Aussparungen und des jeweiligen Schlitzes, durch die Dicke der Scheibe und/oder durch die Drehgeschwindigkeit der Scheibe die Belag-Ausgaberate steuerbar ist.

9. Vorrichtung nach Anspruch 8, wobei die Scheibe (100) eine Mehrzahl von Aussparungen (102-104) unterschiedlicher Größe aufweist, die insbesondere unter gleichmäßigen Winkel- und/oder Radialabständen auf der Scheibe (100) verteilt angeordnet sind.

10. Vorrichtung nach einem der vorhergehenden Ansprüche, wobei der Teigträger (39) zur Aufnahme eines freigeschobenen Teigs, insbesondere Pizzaleigs, ausgelegt ist, wobei der Teigträger (39) ferner eine Fördereinrichtung (41) zum Abtransportieren eines belegten Teigs zu einer nachgeordneten Bearbeitungsstation (2, 78-81) aufweist.

11. Vorrichtung nach einem der vorhergehenden Ansprüche, weiterhin umfassend ein Gehäuse (10) mit einer zugeordneten Kühlvorrichtung, wobei zumindest einige der Belag-Ausgabevorrichtungen (8), bevorzugter die gesamte Vorrichtung (1) einschließlich sämtlicher Belag-Ausgabevorrichtungen (8, 9), innerhalb des Gehäuses (10) angeordnet sind.

12. Verfahren zur Herstellung eines flachen, mit verschiedenen Belägen (94, 96) belegten Teiggebäcks (90), mittels einer Vorrichtung, die eine Mehrzahl von in einer Matrixanordnung entlang von zwei zueinander orthogonalen Raumrichtungen (x, y) verteilt angeordneten Belag-Ausgabevorrichtungen (8, 9, 59, 62, 63) sowie eine bewegliche Positionierungseinrichtung (30) umfasst, die vertikal unterhalb einer von den Belag-Ausgabevorrichtungen aufgespannten Ebene vorgesehen ist und der ein drehbeweglich gelagerter Teigträger (39) zugeordnet ist, bei welchem Verfahren:
ein Teig auf den Teigträger (39) aufgebracht wird und
der Teigträger (39) sequenziell unterhalb von ausgewählten Belag-Ausgabevorrichtungen positioniert wird, wobei
die Ausgabe von Belag durch die jeweilige Belag-Ausgabevorrichtung nur dann ausgelöst wird, wenn der Teigträger (39) in vorbestimmter Weise relativ zu der jeweiligen Belag-Ausgabevorrichtung positioniert ist und
durch Drehen des Teigträgers (39) um eine vertikale Drehachse (38) während oder im Anschluss an die Ausgabe des Belags eine gleichmäßigere Verteilung der Beläge und/oder von Zutaten auf dem Teig ermöglicht wird und/oder
durch Drehen des Teigträgers (39) um die vertikale Drehachse (38) und durch Anlage an einem Gegenstück ein auf den Teigträger (39) aufgebrachtes Teigstück zu einem kreisförmigen Teig gleichmäßiger Dicke vergleichmäßigt wird oder ein auf den Teig aufgebrachter Belag zu einer kreisförmigen Belagschicht gleichmäßiger Dicke vergleichmäßigt wird.

13. Verfahren nach Anspruch 12, wobei die Ausgabe von Belag durch eine Belag-Ausgabevorrichtung durch Positionieren des Teigträgers (39) unterhalb der Belag-Ausgabevorrichtung sowie durch Anheben des Teigträgers (39) bis zum Erreichen eines vorbestimmten maximalen Abstands oder eines verschwindenden Abstands zwischen dem Teigträger und einem unteren Ende der Belag-Ausgabevorrichtung ausgelöst wird.

14. Verfahren nach Anspruch 12 oder 13, wobei die Belag-Ausgabevorrichtung jeweils passiv von der Positionierungseinrichtung (30) und/oder dem Teigträger (39) angetrieben wird, um Belag auszugeben.

15. Verfahren nach einem der Ansprüche 12 bis 14, wobei die Ausgabe von Belag durch den gegenseitigen Eingriff des Teigträgers (39) und/oder der Positionierungseinrichtung (30) mit einem unteren Ende einer Belag-Ausgabevorrichtung ausgelöst wird.

16. Verfahren nach einem der Ansprüche 12 bis 15, wobei eine der Belag-Ausgabevorrichtungen zum Ausgeben von kreisrunden Hartwurstscheiben (94, 96) ausgelegt ist, wobei ein Hartwurstscheibenvorrat zum Ausgeben der Hartwurstscheiben exzentrisch zu dem Teigträger (39) positioniert ist und eine Mehrzahl von Hartwurstscheiben (94, 96) durch Drehen des Teigträgers (39) um seine Drehachse (38) entlang von zumindest einem konzentrischen Umkreis (92, 93) auf dem Teig (90) verteilt ausgegeben werden.

17. Verfahren nach Anspruch 16, wobei die Hartwurstscheiben (94, 96) unter vorbestimmten konstanten Winkelabständen entlang des jeweiligen konzentrischen Umkreises (92, 93) verteilt angeordnet werden.

18. Verfahren nach Anspruch 16 oder 17, wobei der Hartwurstscheibenvorrat radial verstellbar ist oder eine Mehrzahl von in unterschiedlichen Itadialstellungen angeordneten Hartwurstscheiben-Ausgabmitteln umfasst, so dass durch Drehen des Teigträgers (39) um seine Drehachse (38) die kreisrunden Hartwurstscheiben entlang von zumindest zwei konzentrischen Umkreisen (92, 93) mit unterschiedlichen Radien verteilt auf den Teig (90) ausgegeben werden.

19. Verfahren nach Anspruch 18, bei dem jeweils drei kreisrunde Hartwurstscheiben (94, 96) in zwei oder mehr punktsymmetrischen Anordnungen mit jeweils dreizähliger Symmetrie, die jeweils unter konstanten Winkelabständen zueinander ausgerichtet sind, auf zwei oder mehr konzentrischen Umkreisen (92, 93) auf dem Teig (90) verteilt angeordnet werden.

20. Verfahren nach Anspruch 18, bei dem vier kreisrunde Hartwurstscheiben (94, 96) in zwei oder mehr punktsymmetrischen Anordnungen mit jeweils vierzähliger Symmetrie, die jeweils unter konstanten Winkelabständen zueinander ausgerichtet sind, auf zwei oder mehr konzentrischen Umkreisen (92, 93) auf dem Teig (90) verteilt angeordnet werden.

21. Verfahren nach Anspruch 18, bei dem insgesamt neun kreisrunde Hartwurstscheiben (94, 96) auf dem Teig (90) verteilt angeordnet werden, wobei jeweils drei Hartwurstscheiben (94) in zwei punktsymmetrischen Anordnungen mit jeweils dreizähliger Symmetrie mit einem Winkelabstand von 45° relativ zu einander auf einem ersten Umkreis (92) und drei weitere Hartwurstscheiben (96) in einer weiteren versetzten punktsymmetrischen Anordnung mit dreizähliger Symmetrie auf einem zweiten konzentrischen Umkreis (93) mit einem anderen Radius verteilt angeordnet werden.

22. Verfahren nach einem der Ansprüche 12 bis 21, bei dem das flache, mit verschiedenen Belägen (94, 96) belegte Teiggebäck (90) eine Pizza ist.

## Claims

1. An apparatus for producing a flat dough product topped with assorted toppings (94, 96), comprising:
a plurality of topping dispensers (8, 9, 59, 62, 63) for dispensing topping
at least one movable positioning mechanism (30), which is provided vertically below a plane spanned by said plurality of topping dispensers and to which a dough carrier (39, 40) is associated with, wherein
said positioning mechanism (30) is driven by a driving device (5) in order to position the dough carrier (39, 40) underneath a selected one of said plurality of topping dispensers (8, 9, 59, 62, 63) to allow topping to be dispensed,
said plurality of topping dispensers (8, 9, 59, 62, 63) are arranged in a matrix configuration (6, 7), distributed in two mutually perpendicular spatial directions, and
said positioning mechanism (30) is configured for selectively positioning said dough carrier (39, 40) in the two mutually perpendicular spatial directions (x, y) in correspondence to said matrix configuration,
**characterised in that** said dough carrier (39, 40) is rotatably supported and a rotary drive (37) is associated thereto for rotating the dough carrier (39, 40) about a vertical rotation axis.

2. The apparatus according to claim 1, said positioning mechanism (30) having guidance means (4, 32) for guiding the dough carrier (39, 40) in the two mutually perpendicular spatial directions (x, y) and a control unit (71) to actuate the drive device (5) in an indexed sequence in correspondence to said matrix configuration of the topping dispensers (8, 9, 62, 63),

3. The apparatus according to claim 2, wherein the guidance means for the respective spatial direction (x, y) comprises a guide rail (4, 32) and a carriage or slide (31, 33) guided by the respective guide rail.

4. The apparatus according to any of the preceding claims, wherein the positioning mechanism (30) further comprises a lifting mechanism (34-36) for raising and lowering the dough carrier (39), in which apparatus dispensing of topping by a topping dispenser (8, 9, 59, 62, 63) is triggered by positioning the dough carrier (39) underneath the topping dispenser and by raising the dough carrier (39) until a predetermined maximum distance or an infinitesimal distance between the dough carrier and a lower end of the selected topping dispenser is reached.

5. The apparatus according to any of the preceding claims, wherein the topping dispensers (8, 9, 59, 62, 63) are actuated passively by the positioning mechanism (30) and/or the dough carrier (39) for dispensing topping.

6. The apparatus according to any of the preceding claims, wherein the positioning mechanism (30) and the topping dispensers are configured such that dispensing of topping by the selected topping dispenser is only triggered when the dough carrier (39) is positioned in a predetermined manner relative to the selected topping dispenser.

7. The apparatus according to claim 6, wherein the dough carrier (39) and/or the positioning mechanism (30) comprises an engaging means (43; 62) for engaging in a correspondingly formed release means (51, 52; 59) provided on the lower end of each topping dispenser (8, 9), said topping dispensers being configured for dispensing topping only if said engaging means and said release means are mutually engaged or are interacting.

8. The apparatus according to any of the preceding claims, wherein in the lower end region of at least one topping dispenser (8, 9) a disc (100) provided with cut-outs (102-104) and supported in such a way that it can rotate about a longitudinal axis (50) of the container, along with a closing element, are provided such that a topping dispensing rate can be controlled by the angle between the cut-outs and the corresponding slot, by the thickness of the disc and/or by the speed of rotation of the disc.

9. The apparatus according to claim 8, wherein the disc (100) comprises a plurality of cut-outs (102-104) of varying size which are in particular distributed around the disc (100) at uniform angular intervals and/or radial intervals.

10. The apparatus according to any of the preceding claims, wherein the dough carrier (39) is configured to hold a freeform dough, in particular a pizza dough, wherein the dough carrier (39) further comprises a conveying mechanism (41) to transfer a topped dough to a downstream processing station (2, 78-81).

11. The apparatus according to any of the preceding claims, further comprising a housing (10) with an associated refrigerating device, wherein at least some of the topping dispensers (8), preferably the entire apparatus including all topping dispensers (8, 9), are located inside the housing (10).

12. A process for producing a flat dough product (90) topped with assorted toppings (94, 96) by means of an apparatus comprising a plurality of topping dispensers (8, 9, 59, 62, 63) for dispensing topping, which dispensers are arranged in a matrix configuration, distributed in two mutually perpendicular spatial directions (x, y), and a movable positioning mechanism (30) which is provided vertically below a plane spanned by said plurality of topping dispensers, a rotatably supported dough carrier (39) being associated with said positioning mechanism; said process comprising the steps of:
placing a piece of dough on the dough carrier (39); and
sequentially positioning the dough carrier (39) underneath selected ones of said plurality of topping dispensers;
in which process the dispensing of topping by the selected topping dispenser is triggered only when the dough carrier (39) is positioned relative to the selected topping dispenser in a predetermined manner, and
by rotating the dough carrier about a vertical rotation axis (38) during or subsequent to the dispensing of topping a more uniform distribution of the toppings and/or of ingredients on the dough is enabled and/or
by rotating the dough carrier about the vertical rotation axis (38) and by engagement with a counter element a piece of dough positioned on the dough carrier (39) is homogenized to a circular dough of uniform thickness or a topping dispensed onto said dough is homogenized to a circular layer of toppings of uniform thickness.

13. The process according to claim 12, wherein the dispensing of topping by the selected topping dispenser is triggered by positioning the dough carrier (39) underneath the selected topping dispenser and by raising the dough carrier (39) until a predetermined maximum distance or an infinitesimal distance between the dough carrier and a lower end of the selected topping dispenser is reached.

14. The process according to claim 12 or 13, wherein the selected topping dispenser is actuated passively by the positioning mechanism (30) and/or the dough carrier (39) for dispensing topping.

15. The process according to any of claims 12 to 14, wherein the dispensing of topping is triggered by the mutual engagement of the dough carrier (39) and/or the positioning mechanism (30) with a lower end of the selected topping dispenser.

16. The process according to any of claims 12 to 15, wherein one of the plurality of topping dispensers is configured for dispensing circular slices (94, 96) of hard cured sausage, a supply of hard cured sausage slices for dispensing slices of hard cured sausage being positioned eccentrically to said dough carrier (39) and a plurality of slices (94, 96) of hard cured sausage being dispensed and distributed in at least one concentric circle (92, 93) on the dough (90) by rotating the dough carrier (39) about its rotational axis (38).

17. The process according to claim 16, wherein the slices (94, 96) of hard cured sausage are distributed at predetermined constant angular intervals along the respective concentric circle (92, 93).

18. The process according to claim 16 or 17, wherein the supply of slices of hard cured sausage is radially adjustable or comprises a plurality of hard cured sausage slice dispensing mechanisms disposed in various different radial positions such that the circular slices of hard cured sausage can be dispensed and distributed on the dough (90) in at least two concentric circles (92, 93) of differing radii by rotating the dough carrier (39) about-its rotational axis (38).

19. The process according to claim 18, wherein two or more centrosymmetrical configurations of three circular slices (94, 96) of hard cured sausage, each having trigonal symmetry, aligned at constant angular intervals to one another, are distributed on two or more concentric circles (92, 93) on the dough (90).

20. The process according to claim 18, wherein two or more centrosymmetrical configurations of four circular slices (94, 96) of hard cured sausage, each having tetragonal symmetry, aligned at constant angular intervals to one another, are distributed on two or more concentric circles (92, 93) on the dough (90).

21. The process according to claim 18, wherein a total of nine circular slices (94, 96) of hard cured sausage are distributed on the dough (90), two centrosymmetrical configurations of three slices (94, 96) of hard cured sausage, each having trigonal symmetry, being distributed at an angular interval of 45° to one another on a first circle (92) and a further offset centrosymmetrical configuration of three further slices (96) of hard cured sausage having trigonal symmetry being distributed on a second concentric circle (93) of a differing radius.

22. The process according to any of claims 12 to 21, wherein the flat dough product (90) topped with assorted toppings (94, 96) is a pizza.

## Revendications

1. Dispositif de fabrication d'un produit plat à base de pâte (90) garni de différentes garnitures (94, 96), comportant :
une multitude de dispositifs de distribution de garniture (8, 9, 59, 62, 63) et au moins un système de positionnement (30) mobile, qui est prévu de manière verticale en dessous d'un plan situé entre les dispositifs de distribution de garniture et auquel est associé un support de pâte (39, 40), sachant que
le système de positionnement (30) est entraîné par un système d'entraînement (5) afin de positionner le support de pâte (39, 40) sous un dispositif de distribution de garniture (8, 9, 59, 62, 63) respectif en vue de la distribution de garniture,
les dispositifs de distribution de garniture (8, 9, 59, 62, 63) sont disposés de manière répartie le long de deux directions spatiales (x, y) orthogonales l'une par rapport à l'autre dans un agencement de matrice (6, 7) et
le dispositif de positionnement (30) servant à positionner le support de pâte (39, 40) est configuré de manière correspondante à l'agencement de matrice, dans les directions spatiales (x, y) orthogonales l'une par rapport à l'autre,
**caractérisé en ce que** le support de pâte (39, 40) est logé de manière mobile en rotation, et ce qu'un mécanisme d'entraînement en rotation (37) est associé au support de pâte (39, 40), afin de faire tourner ce dernier autour d'un axe de rotation (38) vertical.

2. Dispositif selon la revendication 1, sachant que le système de positionnement (30) présente des moyens de guidage (4, 32) servant à guider le support de pâte (39, 40) le long des deux directions spatiales (x, y) orthogonales l'une par rapport à l'autre, ainsi qu'un système de commande (71) servant à commander de manière indexée le système d'entraînement (5) en correspondance avec l'agencement de matrice des dispositifs de distribution de garniture (8, 9, 62, 63).

3. Dispositif selon la revendication 2, sachant que le moyen de guidage pour chaque direction spatiale (x, y) comporte un rail de guidage (4, 32) et un chariot (31, 33) guidé par chaque rail de guidage.

4. Dispositif selon l'une quelconque des revendications précédentes, sachant que le système de positionnement (30) comporte en outre un système de levage (34-36) servant à lever et à abaisser le support de pâte (39), sachant que la distribution de garniture est déclenchée par un dispositif de distribution de garniture (8, 9, 59, 62, 63) en positionnant le support de garniture (39) sous le dispositif de distribution de garniture ainsi que par le levage du support de pâte (39) jusqu'à ce qu'une distance maximale prédéfinie ou une distance infiniment petite entre le support de pâte et une extrémité inférieure du dispositif de distribution de garniture soit atteinte.

5. Dispositif selon l'une quelconque des revendications précédentes, sachant que les dispositifs de distribution de garniture (8, 9, 59, 62, 63) sont entraînés respectivement de manière passive par le système de positionnement (30) et/ou le support de pâte (39) afin de distribuer de la garniture.

6. Dispositif selon l'une quelconque des revendications précédentes, sachant que le système de positionnement (30) et les dispositifs de distribution de garniture sont configurés de telle sorte que la distribution de garniture n'est déclenchée par le dispositif de distribution de garniture respectif que lorsque le support de pâte (39) est positionné par rapport au dispositif de distribution de garniture respectif d'une manière prédéfinie.

7. Dispositif selon la revendication 6, sachant que le support de pâte (39) et/ou le système de positionnement (30) présentent un moyen d'engrènement (43 ; 62) pour venir en prise avec un moyen de déclenchement (51, 52 ; 59) réalisé de manière correspondante, lequel moyen de déclenchement est prévu respectivement au niveau de l'extrémité inférieure des dispositifs de distribution de garniture (8, 9), sachant que le dispositif de distribution de garniture est configuré de telle sorte que la distribution de garniture n'a lieu que lorsque le moyen d'engrènement et le moyen de déclenchement sont en prise l'un avec l'autre ou lorsqu'ils coopèrent.

8. Dispositif selon l'une quelconque des revendications précédentes, sachant qu'un disque (100) pourvu d'évidements (102-104) et logé de manière mobile en rotation autour d'une axe longitudinale de récipient (50) ainsi qu'un organe de fermeture sont prévus dans la zone d'extrémité inférieure d'au moins un dispositif de distribution de garniture (8, 9) de sorte que le taux de distribution de garniture peut être commandé par la position angulaire des évidements et de la fente respective, par l'épaisseur du disque et/ou par la vitesse de rotation du disque.

9. Dispositif selon la revendication 8, sachant que le disque (100) présente une multitude d'évidements (102-104) de diverse grandeur, lesquels sont disposés de manière répartie sur le disque (100) en particulier à des distances angulaires et/ou radiales homogènes.

10. Dispositif selon l'une quelconque des revendications précédentes, sachant que le support de pâte (39) est configuré pour recevoir une pâte glissée librement, en particulier une pâte à pizza, sachant que le support de pâte (39) présente en outre un système de transport (41) servant à transporter une pâte à garnir en direction d'une station d'usinage (2, 78-81) disposée en aval.

11. Dispositif selon l'une quelconque des revendications précédentes, comportant en outre un boîtier (10) équipé d'un dispositif de refroidissement associé, sachant qu'au moins quelques-uns des dispositifs de distribution de garniture (8), de préférence le dispositif (1) en entier y compris les dispositifs de distribution de garniture (8, 9), sont disposés à l'intérieur du boîtier (10).

12. Procédé de fabrication d'un produit plat à base de pâte (90) garni avec différentes garnitures (94, 96) au moyen d'un dispositif, qui comporte une multitude de dispositifs de distribution de garniture (8, 9 59, 62, 63) disposés de manière répartie selon un agencement de matrice le long de deux directions spatiales (x, y) orthogonales l'une par rapport à l'autre ainsi qu'un système de positionnement (30) mobile, qui est prévu de manière verticale sous un plan de situant entre les dispositifs de distribution de garniture et auquel est associé un support de pâte (39) logé de manière mobile en rotation, dans le cadre duquel procédé :
une pâte est déposée sur le support de pâte (39) et
le support de pâte (39) est positionné se manière séquentielle sous des dispositifs de distribution de garniture, sachant que
la distribution de garniture n'est déclenchée par le dispositif de distribution de garniture respectif que lorsque le support de pâte (39) est positionné par rapport au dispositif de distribution de garniture respectif d'une manière prédéfinie et que
la rotation du support de pâte (39) autour d'un axe de rotation (38) vertical permet pendant ou directement après la distribution de la garniture une répartition homogène des garnitures et/ou des ingrédients sur la pâte et/ou que
la rotation du support de pâte (39) autour de l'axe de rotation (38) vertical et l'installation au niveau d'un pendant permet d'homogénéiser la pièce de pâte déposée sur le support de pâte (39) en une pâte circulaire d'épaisseur homogène ou d'homogénéiser une garniture déposée sur la pâte en une couche de garniture circulaire d'une épaisseur homogène.

13. Procédé selon la revendication 12, sachant que la distribution de garniture est déclenchée par un dispositif de distribution de garniture en positionnant le support de pâte (39) sous ledit dispositif de distribution de garniture ainsi que par le levage du support de pâte (39) jusqu'à ce qu'une distance maximale prédéfinie ou une distance infiniment petite entre le support de pâte et une extrémité inférieure du dispositif de distribution de garniture soit atteinte.

14. Procédé selon la revendication 12 ou 13, sachant que le dispositif de distribution de garniture est respectivement entraîné de manière passive par le système de positionnement (30) et/ou par le support de pâte (39), afin de distribuer de la garniture.

15. Procédé selon l'une quelconque des revendications 12 à 14, sachant que la distribution de garniture est déclenchée par l'engrènement mutuel du support de pâte (39) et/ou du système de positionnement (30) avec une extrémité inférieure d'un dispositif de distribution de garniture.

16. Procédé selon l'une quelconque des revendications 12 à 15, sachant qu'un des dispositifs de distribution de garniture est configuré en vue de la distribution de tranches rondes de charcuterie (94, 96), sachant qu'un réservoir de tranches de charcuterie est positionné en vue de la distribution de tranches de charcuterie de manière excentrique par rapport au support de pâte (39) et qu'un multitude de tranches de charcuterie (94, 96) est distribuée de manière répartie sur la pâte (90) grâce à la rotation du support de pâte (39) autour de son axe de rotation (38) le long d'au moins un cercle (92, 93) concentrique.

17. Procédé selon la revendication 16, sachant que les tranches de charcuterie (94, 96) sont disposées de manière répartie le long du cercle (92, 93) respectif concentrique à des distances angulaires constantes prédéfinies.

18. Procédé selon la revendication 16 ou 17, sachant que le réservoir de tranches de charcuterie peut être déplacé de manière radiale ou comporte une multitude de moyens de distribution de tranches de charcuterie disposés dans diverses positions radiales de sorte que la rotation du support de pâte (39) autour de son axe de rotation (38) permet de distribuer sur la pâte (90) de manière répartie, les tranches de charcuterie rondes le long d'au moins deux cercles (92, 93) concentriques présentant des rayons différents.

19. Procédé selon la revendication 18, dans le cadre duquel respectivement trois tranches de charcuterie rondes (94, 96) sont disposées de manière répartie sur la pâte (90), sur deux cercles (92, 93) concentriques ou plus, dans deux agencements ou plus à symétrie ponctuelle avec respectivement une symétrie triple, lesquels agencements sont orientés respectivement les uns par rapport aux autres à des distances angulaires constantes.

20. Procédé selon la revendication 18, dans le cadre duquel quatre tranches de charcuterie (94, 96) rondes sont disposées de manière répartie sur la pâte (90) sur deux cercles (92, 93) concentriques ou plus dans deux agencements ou plus à symétrie ponctuelle avec respectivement une symétrie quadruple, lesquels agencements sont orientés les uns par rapport aux autres à des distances angulaires constantes.

21. Procédé selon la revendication 18, dans le cadre duquel au total neuf tranches de charcuterie (94, 96) rondes sont disposées de manière répartie sur la pâte (90), sachant que respectivement trois tranches de charcuterie (94) sont disposées de manière répartie sur un premier cercle (92) dans deux agencements à symétrie ponctuelle avec respectivement une symétrie triple à une distance angulaire de 45° les uns par rapport aux autres et que trois autres tranches de charcuterie (96) sont disposées de manière répartie sur un deuxième cercle (93) concentrique présentant un autre rayon, dans un autre agencement décalé à symétrie ponctuelle avec une symétrie triple.

22. Procédé selon l'une quelconque des revendications 12 à 21, dans le cadre duquel le produit plat à base de pâte (90) garni de différentes garnitures (94, 96) est une pizza.
